(19) **Europäisches Patentamt**
**European Patent Office**
**Office européen des brevets**

(11) **EP 1 838 762 B1**

(12) **FASCICULE DE BREVET EUROPEEN**

(45) Date de publication et mention
de la délivrance du brevet:
**18.04.2012 Bulletin 2012/16**

(51) Int Cl.:
*C09K 8/68* (2006.01)     *C09K 8/88* (2006.01)
*C08F 293/00* (2006.01)

(21) Numéro de dépôt: **05850544.7**

(22) Date de dépôt: **20.12.2005**

(86) Numéro de dépôt international:
**PCT/FR2005/003195**

(87) Numéro de publication internationale:
**WO 2006/067325 (29.06.2006 Gazette 2006/26)**

(54) **COMPOSITION POUVANT FORMER UN GEL COMPRENANT UN COPOLYMERE, ET COPOLYMERES UTILES**

ZUSAMMENSETZUNG, DIE EIN GEL BILDEN KANN, UMFASSEND EIN COPOLYMER, UND VERWENDBARE COPOLYMERE

COMPOSITION THAT CAN FORM A GEL COMPRISING A COPOLYMER, AND USEFUL COPOLYMERS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.12.2004 FR 0413657**

(43) Date de publication de la demande:
**03.10.2007 Bulletin 2007/40**

(73) Titulaire: **RHODIA CHIMIE**
**92512 Boulogne Billancourt Cedex (FR)**

(72) Inventeurs:
• **BENDEJACQ, Denis**
**F-75005 Paris (FR)**
• **PITOIS, Claire**
**F-95520 Osny (FR)**
• **KARAGIANNI, Katerina**
**F-75013 Paris (FR)**

(74) Mandataire: **Cordier, Pascal Christian**
**Rhodia Operations**
**Direction de la Propriété Industrielle**
**40, rue de la Haie Coq**
**93306 Aubervilliers (FR)**

(56) Documents cités:
**EP-A- 1 433 799**     **WO-A-02/07861**
**US-B1- 6 336 966**

• **SHEMPER B S ET AL: "Syntheses and characterization of statistical and block fluorinated copolymers with linear and star-like architectures via ATRP" EUROPEAN POLYMER JOURNAL, PERGAMON PRESS LTD. OXFORD, GB, vol. 40, no. 4, avril 2004 (2004-04), pages 651-665, XP004495762 ISSN: 0014-3057**

**EP 1 838 762 B1**

Printed by Jouve, 75001 PARIS (FR)

**Description**

La présente invention a pour objet une composition pouvant former un gel comprenant un copolymère. La composition est une composition aqueuse, et le copolymère est un copolymère étoile. La présente invention a également pour objet des copolymères utiles notamment pour ces compositions.

Des compositions sous forme de gels sont utilisées dans différentes industries, par exemple dans l'industrie de l'exploitation des gisements de gaz et de pétrole, l'industrie cosmétique, l'industrie de produit de soins ménagers, l'industrie des revêtements, notamment des peintures.

Dans les formulations aqueuses, il est connu d'utiliser des polymères amphiphiles dits associatifs, afin d'obtenir des gels. Il est également connu d'utiliser certains tensioactifs, dit tensioactifs viscoélastiques. Il est également connu d'utiliser des associations de polymères polyioniques et de composés de charges opposées. On crée ainsi dans l'eau des interactions physiques se traduisant par la formation de gels. Il est également connu d'utiliser des systèmes à réticulation chimique par exemple, des associations de guar ou de dérivés du guar avec des composés comprenant du Bore, par exemple le borax. Toutes ces technologies permettent d'obtenir des gels de propriétés différentes, par exemple en terme de réversibilité, en terme de comportement à différentes conditions de température, pression et pH, en terme de propriété rhéologiques à différents cisaillements, notamment la force du gel, et/ou de quantité de produits à utiliser.

Le document WO 01/16187 décrit la formation de gels à l'aide de copolymères dibloc amphiphiles comprenant un bloc hydrophile et un bloc hydrophobe et dont le bloc hydrophile comprend des unités hydrophobes.

Le document WO 03/006532 décrit la formation d'un gel à l'aide d'une association d'un polymère pontant cationique et d'un copolymère étoile (microgel) comprenant un coeur et en périphérie du coeur des branches macromoléculaires comprenant chacune un bloc hydrophile intermédiaire neutre de polyacrylamide ou de polyhydroxyéthylacrylate, et un bloc périphérique hydrophile de poly(acide acrylique), anionique à pH 7.

Le document WO02/070861 décrit des gels viscoélastiques et des fluides de fracturation comprenant des polymères blocs. Aucun polymère étoilé n'est divulgué.

Par ailleurs, le document WO 00/02939, décrit un procédé de préparation de copolymères étoiles (ou microgels) et des copolymères étoiles obtenus. Ce document enseigne de manière très générale, page 18, lignes 5-7, que les copolymères étoiles peuvent être utiles comme agents de contrôle de la rhéologie dans des compositions aqueuses. Toutefois ce document ne divulgue pas la formation de gels, et n'identifie pas les copolymères ou les familles de copolymères pouvant trouver une utilité comme agents de contrôle de la rhéologie. Les copolymères décrits dans les exemples comprennent un coeur organique polymérique et des branches d'homopolymères hydrophobes (styrène) ou de copolymères statistiques hydrophobes (methacrylate d'isobutyle / methacrylate d'éthylhexyle). Les exemples ne divulguent pas des branches sous forme de copolymères à blocs.

Le document WO 01/77198, décrit un autre procédé de préparation de copolymères étoiles (ou microgels) et des copolymères étoiles obtenus. Ce document enseigne que la forme et la morphologie des produits peuvent être très diverses (page 22). Ce document enseigne de manière très générale, page 24, ligne 15, que les copolymères étoiles peuvent être utiles comme agents de contrôle de la rhéologie dans des compositions. Les compositions décrites dans le document sont de manière générale des compositions non aqueuses. Les copolymères décrits dans les exemples comprennent un coeur organique polymérique (de manière générale hydrophobe à base de méthacrylate de butyle) et des branches de copolymères diblocs comprenant un bloc hydrophobe intermédiaire (à base de méthacrylate de butyle) et un bloc périphérique hydrophile (à base d'acide méthacrylique). Ces copolymères ne permettent pas l'obtention de gels en milieu aqueux.

Le document WO 2004/014535, décrit un procédé de préparation de copolymères étoiles (ou microgels) et des copolymères étoiles obtenus. Les copolymères comprennent un coeur organique polymérique, et des branches polymériques pouvant le cas échéant comprendre des associations de différents monomères pour moduler des propriétés. Des associations de monomères sont décrites page 21, lignes 16-27. Le document ne décrit pas d'arrangements particuliers pour ces associations. Les copolymères décrits dans les exemples comprennent un coeur organique polymérique (à base d'acrylamide) et des branches d'homopolymères d'acrylamide, ou un coeur organique polymérique (à base d'acrylate de butyle) et des branches d'homopolymères d'acrylate de butyle.

On cherche toujours de nouveaux systèmes pouvant former des gels, pouvant présenter des propriétés différentes, par exemple en terme de réversibilité, en terme de comportement à différentes conditions de température, pression et pH, en terme de propriétés rhéologiques à différents cisaillements, notamment la force du gel, et/ou en terme de quantité de produits à utiliser. Ces nouveaux gels peuvent ainsi permettre de moduler les propriétés de formulations dans différents domaines de l'industrie et/ou de faciliter leur préparation ou mise en oeuvre. A cet effet, on cherche également toujours de nouveaux composés chimiques pouvant apporter ces améliorations.

Ainsi l'invention propose un copolymère étoile comprenant un coeur et en périphérie du coeur des branches macromoléculaires comprenant chacune;

- un bloc A intermédiaire lié au coeur ou au moins en partie compris dans le coeur, et

- un bloc B périphérique lié au bloc A,
- les blocs A et B étant tels que:

    - le bloc A est hydrophile et le bloc B est hydrophobe, ou
    - le bloc A est hydrophile et le bloc B est hydrophile cationique ou potentiellement cationique.

Les nouveaux copolymères étoiles peuvent être utilisés dans de compositions aqueuses notamment pour former des gels, ou peuvent être utilisés autrement.

Ainsi l'invention propose également une composition aqueuse comprenant:

- de l'eau
- te copolymères,
- au moins un tensioactif choisi parmi :

    - les tensioactifs non Ioniques choisis parmi les phénols polyalcoxylés substitués par
    - au moins un radical alkyle en $C_4$-$C_{20}$ ou substitués par au moins un radical alkylaryle dont la partie alkyle est en $C_1$-$C_6$, les alcools ou les acides gras en $C_6$-$C_{22}$, les triglycérides polyalcoxylés d'origine végétale ou animale, les esters de sorbitan, et les alkyles ou alcools polyalcoxylés ;
    - les tensioactifs anioniques choisis parmi les acides alkylsulfoniques, les acides arylsulfoniques, éventuellement substitués par un ou plusieurs groupements hydrocarbonés, et dont la fonction acide est partiellement ou totalement salifiée, les mono- ou diesters d'acides alkylsulfosucciniques, dont la partie alkyle, linéaire ou ramifiée est éventuellement substituée par un ou plusieurs groupements hydroxylés et/ou alcoxylés, linéaires ou ramifiés en $C_2$-$C_4$, les esters phosphates et les esters sulfates;
    - les tensioactifs cationiques,
    - les tensioactifs amphotères ;
    - et les tensioactifs zwitterioniques.

L'invention propose également un procédé de contrôle de la formation de gels viscoélastiques comprenant les étapes suivantes:

    a) préparer une composition aqueuse comprenant:

    - de l'eau,
    - le copolymère,
    - éventuellement un tensioactif,

    b) former un gel par agitation et/ou par ajout de tensioactif et/ou chauffage.

L'invention propose également des fluides pour l'exploitation des gisement de pétrole ou de gaz, avantageusement des fluides de fracturation, comprenant le copolymère, de l'eau et éventuellement un tensioactif, ou l'utilisation du copolymère et éventuellement d'un tensioactif pour dans les fluides, de préférence dans les fluides de fracturation, ou la mise en oeuvre du procédé ci-dessus lors de l'exploitation des gisement de pétrole ou de gaz.

Définitions

Dans la présente demande, on entend par copolymère étoile un composé au moins partiellement macromoléculaire comprenant un coeur et en périphérie du coeur des branches macromoléculaires, liées au coeur. Il s'agit d'architectures plus ou moins complexes, qui sont connues de l'homme du métier. On utilise aussi parfois le terme de "microgel" incluant les copolymères étoiles et d'autres architectures. Dans la présente demande, le terme copolymère étoile couvre la notion de microgel. Dans la présente demande, le terme "bras" est également employé à la place de "branches" et couvre la même notion. Le nombre de branches est par définition d'au moins 3. Ce nombre est généralement lié à la nature du coeur et/ou au procédé de préparation du copolymère.

Dans la présente demande, on désigne par unité dérivant d'un monomère une unité qui peut être obtenue directement à partir dudit monomère par polymérisation. Ainsi, par exemple, une unité dérivant d'un ester d'acide acrylique ou méthacrylique ne couvre pas une unité de formule $-CH_2-CH(COOH)-$, $-CH_2-C(CH_3)(COOH)-$, $-CH_2-CH(OH)-$, respectivement, obtenue par exemple en polymérisant un ester d'acide acrylique ou méthacrylique, ou de l'acétate de vinyle, respectivement, puis en hydrolysant. Une unité dérivant d'acide acrylique ou méthacrylique couvre par exemple une unité obtenue en polymérisant un monomère (par exemple un ester d'acide acrylique ou méthacrylique), puis en faisant réagir (par exemple par hydrolyse) le polymère obtenu de manière à obtenir des unités de formule $-CH_2-CH(COOH)-$, ou $-CH_2-C(CH_3)(COOH)-$. Une unité dérivant d'un alcool vinylique couvre par exemple une unité obtenue en polymérisant un monomère (par exemple un ester vinylique), puis en faisant réagir (par exemple par hydrolyse) le polymère obtenu de manière à obtenir des unités de formule $-CH_2-CH(OH)-$.

Typiquement, la masse molaire moyenne théorique $M_{bloc}$ d'un bloc, est calculée selon la formule suivante:

$$M_{bloc} = \sum_i M_i * \frac{n_i}{n_{precursor}},$$

où $M_i$ est la masse molaire d'un monomère i, $n_i$ est le nombre de moles du monomère i, $n_{precursor}$ est le nombre de moles de fonctions auquel sera liée la chaîne macromoléculaire du bloc. Les fonctions peuvent provenir d'un agent de transfert (ou un groupe de transfert) ou un amorceur, un bloc précédent, un coeur etc. S'il s'agit d'un bloc précédent ou d'un coeur, le nombre de moles peut être considéré comme le nombre de moles d'un composé auquel la chaîne macromoléculaire dudit bloc précédent ou coeur a été liée, par exemple un agent de transfert (ou un groupe de transfert) ou un amorceur.

Les masses molaires mesurées de branches sont des masses molaires moyennes en nombre, mesurées par chromatographie d'exclusion stériques (SEC), avant assemblage des branches à un coeur, ou avant formation d'un coeur.

Les masses molaires mesurées d'un bloc sont des masses molaires moyennes en nombre, mesurées par chromatographie d'exclusion stériques (SEC), après formation du bloc, à laquelle on soustrait éventuellement la masse molaire mesurée d'un bloc précédemment formé.

Le coefficient de génération de branches théorique est donné par la formule r= $n_{Rdifunct}$ / $n_{precursor}$, où $n_{difunct}$ est le nombre de moles de monomère de moles d'un monomère réticulant $R_{difunct}$ diéthyléniquement insaturé. Plus ce coefficient est élevé, dans le cas de microgels C-branches, plus le nombre de branches est élevé. On mentionne que le nombre de branches réel du microgel n'est généralement pas égal à ce coefficient. On mentionne que ce coefficient est généralement modulé en fonction du procédé de préparation du copolymère étoile: pour un nombre de branches réel ou mesuré identique, il est généralement pour un procédé de type "coeur d'abord" que pour un procédé de type "bras d'abord".

La masse molaire mesurée d'un copolymère étoile $M_{star}$ est une masse molaire moyenne en masse mesurée par des expériences de diffusion de la lumière en statique, à l'aide de courbes de Zimm.

Le nombre de branches mesuré $n_{bras}$ pour un copolymère à coeur organique polymérique réticulé est donné par la formule: $M_{star} = M_w * n_{bras}$ où $M_w$ est la masse molaire moyenne en masse mesuré par des expériences de diffusion de la lumière en statique, à l'aide de courbes de Zimm, sur un copolymère à blocs obtenu de la même manière que le copolymère étoile, mais sans utilisation de monomère multiéthyléniquement insaturé (monomère réticulant R).

Dans la présente demande, le terme «hydrophobe» est utilisé dans son sens usuel de «qui n'a pas d'affinité pour l'eau»; cela signifie que le polymère organique dont il est constitué, pris seul (de même composition et de même masse molaire), formerait une solution macroscopique diphasique dans de l'eau distillée à 25°C, à une concentration supérieure à 1 % en poids.

Dans la présente demande, le terme «hydrophile» est également utilisé dans son sens usuel de «qui a de l'affinité pour l'eau», c'est-à-dire n'est pas susceptible de former une solution macroscopique diphasique dans de l'eau distillée à 25°C à une concentration supérieure à 1% en poids.

Dans la présente demande, le terme «gel viscoélastique» désigne un fluide qui présente un module élastique G' ("storage modulus" en anglais) supérieur ou égal au module de perte G'' ("loss modulus" en anglais) sur une gamme de fréquence comprise entre 1 et 10 Hz, avec une géométrie de type cône-plan; les modules étant mesurés dans le régime linéaire de viscoélasticité, à 25°C, avec un Rhéomètre Carrimed. Les propriétés rhéologiques des fluides peuvent dépendre de la température. Par extension, dans la présente demande, on désigne par gel viscoélastique, un fluide qui présente la propriété décrite ci-dessus à au moins une température comprise entre 25°C et 300°C, à pression atmosphérique ou à pression supérieure.

Par unités cationiques ou potentiellement cationiques, on entend des unités qui comprennent un groupe cationique ou potentiellement cationique. Les unités ou groupes cationiques sont des unités ou groupes qui présentent au moins une charge positive (généralement associée à un ou plusieurs anions comme l'ion chlorure, l'ion bromure, un groupe sulfate, un groupe méthylsulfate), quel que soit le pH du milieu dans lequel le copolymère est introduit. Les unités ou groupes potentiellement cationiques sont des unités ou groupes qui peuvent être neutres ou présenter au moins une charge positive selon le pH du milieu le copolymère est introduit. Dans ce cas on parlera d'unités potentiellement cationiques sous forme neutre ou sous forme cationique. Par extension on peut parler de monomères cationiques ou potentiellement cationiques.

Par unités anioniques ou potentiellement anioniques, on entend des unités qui comprennent un groupe anionique ou potentiellement anionique. Les unités ou groupes anioniques sont des unités ou groupes qui présentent au moins une charge négative (généralement associée à un ou plusieurs cations comme des cations de composés alcalins ou alcalino-terreux, par exemple le sodium, ou à un ou plusieurs composés cationiques comme l'ammonium), quel que soit le pH du milieu où est présent le copolymère. Les unités ou groupes potentiellement anioniques sont des unités ou groupes qui peuvent être neutres ou présenter au moins une charge négative selon le pH du milieu où est présent le copolymère. Dans ce cas on parlera de d'unités potentiellement anioniques sous forme neutre ou sous forme anionique. Par extension on peut parler de monomères anioniques ou potentiellement anioniques.

Par unités neutres, on entend des unités qui ne présentent pas de charge, quel que soit le pH du milieu où est présent le copolymère.

On donne ci-dessous quelques détails quant aux copolymères de l'invention, certaines de leurs caractéristiques et des procédés utiles pour leur préparation, puis quant aux tensioactifs pouvant entrer dans la composition de l'invention, puis quant aux compositions en elles-mêmes, et les utilisations.

Copolymère étoile

On donne ci-dessous des détails quant aux copolymères étoiles selon l'invention, et à des procédés utiles pour leur préparation. On note que ces copolymères sont nouveaux et sont intéressants notamment pour ou dans les compositions selon la présente invention, notamment pour former des gels. On précise toutefois qu'ils peuvent être intéressants, en tant que tels, par exemple dans d'autres compositions et/ou dans d'autres domaines, par exemple pour le traitement et/ou les modifications de surfaces.

On cite par exemple les domaines de la cosmétique, la surface étant une surface kératinique, par exemple les cheveux et cils, ou une surface cutanée, la composition pouvant être un shampoing, après-shampoing, un gel-douche, un produit de protection solaire, une crème pour le soin de la peau, la composition comprenant, outre le copolymère, un vecteur cosmétiquement acceptable tel que de l'eau, éventuellement des tensioactifs anioniques, nonioniques, cationiques, amphotères et/ou zwitterioniques, éventuellement des agents conditionneurs, et éventuellement d'autres ingrédients usuellement utilisés.

On cite également les domaines des soins ménagers du linge, en particulier la lessive et du nettoyage industriel ou institutionnel du linge, la surface étant une surface textile, la composition pouvant être une lessive liquide pour lave-linge, comprenant, outre le copolymère, un vecteur tel que de l'eau, éventuellement des tensioactifs anioniques, non ioniques, cationiques, amphotères et/ou zwitterioniques, et éventuellement d'autres ingrédients usuellement utilisés.

On cite également le domaine des revêtement de surfaces, par exemple les peintures.

On cite tout particulièrement le domaine de l'exploitation des gisements de pétrole ou de gaz, la surface étant la surface d'un puits, par exemple pour la réduction des filtrats.

Le copolymère étoile comprend un coeur et en périphérie du coeur des branches macromoléculaires comprenant chacune:

- un bloc A intermédiaire lié au coeur ou au moins en partie compris dans le coeur, et
- un bloc B périphérique lié au bloc A,
- les blocs A et B étant tels que:

    - le bloc A est hydrophile et le bloc B est hydrophobe, ou
    - le bloc A est hydrophile et le bloc B est hydrophile cationique ou potentiellement cationique.

Les branches macromoléculaires en périphérie du coeur peuvent être liées au coeur, par le bloc A, de préférence par des liaisons covalentes. Les liaisons covalentes sont de préférence des liaisons entre une extrémité du bloc A et la périphérie du coeur. Les branches macromoléculaires en périphérie du coeur peuvent constituer, par au moins une partie du bloc A, au moins une partie du coeur. Le bloc A est dans ce cas au moins en partie compris dans le cœur. Ainsi selon un mode de réalisation, le bloc A comprend des unités réticulées entre elles dans le coeur. Le bloc A est alors au moins en partie compris dans le coeur. Selon un autre mode de réalisation, le coeur est une partie A', par exemple un bloc A', comprenant des unités réticulées entre elles, et dont les extrémités sont liées aux blocs A.

Le coeur peut être notamment:

- un coeur minéral,
- un coeur organique non polymérique,
- un coeur organique polymérique réticulé chimiquement, ou
- un coeur organique polymérique gelé physiquement réticulé.

Les copolymères présentant un coeur minéral ont un bloc A lié au coeur. Les copolymères présentant un coeur minéral peuvent notamment être obtenus par croissance des branches macromoléculaires sur des fonctions chimiques présentes à la surface de particules minérales, de préférence nanométriques, ladite surface ayant le cas échéant été spécialement fonctionnalisée à cet effet. La croissance peut être réalisée par exemple par un procédé de polymérisation radicalaire contrôlée ou vivante. De tels procédés seront décrits par la suite. Ainsi on peut opérer par croissance du bloc A, puis du bloc B. De tels copolymères peuvent présenter un groupe de transfert ou un résidu de groupe à l'extrémité du bloc B.

Les copolymères présentant un coeur minéral peuvent également être obtenus par greffage de branches macromoléculaires préparées au préalable, entre une extrémité au bloc A et la surface de particules minérales. L'extrémité du bloc A et/ou les particules minérales peuvent être spécialement fonctionnalisées à cet effet.

Le coeur minéral et/ou les particules minérales peuvent notamment être des nanoparticules. Le coeur minéral et/ou les particules minérales peuvent notamment être à base de silice, de dioxyde de titane ou d'oxyde de cérium.

Les copolymères présentant un coeur organique non polymérique ont un bloc A lié au coeur. Les copolymères présentant un coeur organique non polymérique peuvent être obtenus par croissance des branches macromoléculaires sur des fonctions chimiques présentes sur une molécule présentant au moins trois fonctions chimiques susceptibles de réagir pour cette croissance. Il peut par exemple s'agir d'une molécule téléchelique, hyperbranchée, ou d'un dendrimère, de préférence de basse masse moléculaire. De telles molécules sont connues de l'homme du métier et de tels procédés sont connus de l'homme du métier. On peut par exemple se référer au document WO 2004 / 078793. La croissance peut être réalisée par exemple par un procédé de polymérisation contrôlée ou vivante, à l'aide d'un agent ou d'un groupe de transfert, par exemple par un procédé de polymérisation radicalaire contrôlée ou vivante. De tels procédés seront décrits par la suite. Ainsi on peut opérer par croissance du bloc A, puis du bloc B. De tels copolymères peuvent présenter un groupe de transfert ou un résidu de groupe à l'extrémité du bloc B.

Les copolymères présentant <u>un coeur organique polymérique réticulé chimiquement</u> ont un bloc A lié au coeur, ou de préférence un bloc A en partie compris dans le coeur. Les copolymères présentant un coeur organique polymérique réticulé chimiquement par des procédés de préparation connus de l'homme du métier, tels que le procédé dit "coeur d'abord" ("core first"), le procédé dit "bras d'abord" ("arm first") et les procédés de réticulation chimique de micelles. Ces procédés sont connus de l'homme du métier et seront détaillés ci-dessous ("procédés utiles"). Ces procédés peuvent mettre en oeuvre des procédés de polymérisation contrôlée ou vivante, à l'aide d'un agent ou d'un groupe de transfert, par exemple par un procédé de polymérisation radicalaire contrôlée ou vivante.

Selon un mode de réalisation, le bloc A comprend des unités réticulées entre elles dans le coeur. Le bloc A est alors au moins en partie compris dans le coeur. Selon un autre mode de réalisation, le coeur est une partie A', par exemple un bloc A', comprenant des unités réticulées entre elles, et dont les extrémités sont liées aux blocs A. Ces modes de réalisation sont accessibles aussi bien par le procédé «core first» que par le procédé «arm first» et que par les procédés de réticulation de micelles. Des copolymères obtenus par un procédé «core first» peuvent présenter un groupe de transfert ou un résidu de groupe à l'extrémité du bloc B. Des copolymères obtenus par un procédé «arm first» peuvent présenter un groupe de transfert ou un résidu de groupe dans le coeur.

Les copolymères présentant un coeur <u>organique polymérique gelé physiquement réticulé</u> ont un bloc A lié au coeur, ou de préférence un bloc A en partie compris dans le coeur. Selon un mode de réalisation, le coeur est un bloc A', fortement hydrophobe, de haute température de transition vitreuse, de préférence supérieure à 40°C, et dont les extrémités sont liées aux blocs A. Selon un autre mode de réalisation, le bloc A est au moins en partie compris dans le coeur et est fortement hydrophobe, de haute température de transition vitreuse, de préférence supérieure à 40°C. En présence d'eau les blocs A et/ou A' se regroupent pour former des nodules gelés, le coeur, difficiles à désolidariser, formant ainsi une réticulation physique. De tels phénomènes et méthodes sont connus de l'homme du métier. Les branches macromoléculaires sont ainsi généralement des copolymères à blocs comprenant le bloc A, le bloc B, et éventuellement un bloc A'. De tels copolymères à bloc peuvent par exemple être obtenus à l'aide de procédés de polymérisation contrôlée ou vivante, à l'aide d'un agent ou d'un groupe de transfert, par exemple par un procédé de polymérisation radicalaire contrôlée ou vivante.

Quelle que soit la nature du coeur, les branches macromoléculaires comprennent chacune un bloc A et un bloc B. Ainsi les branches macromoléculaires peuvent présenter une structure dibloc (bloc A)-(bloc B), ou tribloc (bloc A')-(bloc A)-(bloc B). Selon un mode de réalisation préféré, au moins des blocs A ou B dérivent de monomères alpha-éthylèniquement insaturés, des préférence les deux blocs A et B, et éventuellement le bloc A' s'il est présent. Ces structures, comme il a été mentionné plus haut, peuvent par exemple être obtenues à l'aide de procédés de polymérisation contrôlée ou vivante, à l'aide d'un agent ou d'un groupe de transfert, par exemple par un procédé de polymérisation radicalaire contrôlée ou vivante.

Selon un premier mode de réalisation des branches, le bloc A est hydrophile et le bloc B est hydrophobe. Ainsi le bloc A peut comprendre des unités dérivant de monomères hydrophiles A, et le bloc B peut comprendre des unités hydrophobes $B_{phobe}$ dérivant de monomères hydrophobes $B_{phobe}$. On note que dans ce mode de réalisation le bloc A peut être:

- neutre, comprenant des unités neutres $A_N$ dérivant de monomères neutres $A_N$,
- anionique ou potentiellement anionique, comprenant des unités anioniques ou potentiellement anioniques $A_A$ dérivant de monomères anioniques ou potentiellement anioniques $A_A$, ou
- cationique ou potentiellement cationique, comprenant des unités cationiques ou potentiellement cationiques $A_C$ dérivant de monomères cationiques ou potentiellement cationiques $A_C$.

Selon un deuxième mode de réalisation, le bloc A est hydrophile et le bloc B est hydrophile cationique ou potentiellement cationique. Ainsi le bloc A peut dériver de monomères hydrophiles $A_{phile}$, et le bloc B peut comprendre des unités $B_C$ dérivant de monomères cationiques ou potentiellement cationiques $B_C$. On note que dans ce mode de réalisation le bloc A est de préférence neutre, comprenant des unités neutres $A_N$ dérivant de monomères neutres $A_N$.

On note que:

- un bloc B hydrophile cationique ou potentiellement cationique peut comprendre des unités $A_N$, ou $A_A$ ou $B_{phobe}$ en quantité molaire inférieure à 25%, de préférence inférieure à 10%,
- un bloc B hydrophobe peut comprendre des unités $A_N$, $A_A$ ou $B_c$ en quantité molaire inférieure à 25%, de préférence inférieure à 10%,
- un bloc A peut comprendre des unités $B_{phobe}$ en quantité molaire inférieure à 40%, de préférence inférieure à 25%, de préférence inférieure à 10%.

A titre d'exemples de <u>monomères hydrophobes $B_{phobe}$ dont</u> peuvent dériver les unités $B_{phobe}$ du bloc B hydrophobe, on peut mentionner:

- les monomères vinylaromatiques tels que styrène, alpha-méthylstyrène, vinyltoluène.

- les halogénures de vinyle ou de vinylidène, comme le chlorure de vinyle, chlorure de vinylidène
- les $C_1$-$C_{12}$ alkylesters d'acides $\alpha$-$\beta$ monoéthyléniquement insaturés tels que les acrylates et méthacrylates de méthyle, éthyle, butyle, acrylate de 2-éthylhexyle ...
- les esters de vinyle ou d'allyle d'acides carboxyliques saturés tels que les acétates, propionates, versatates, stéarates ... de vinyle ou d'allyle
- les nitriles $\alpha$-$\beta$ monoéthyléniquement insaturés contenant de 3 à 12 atomes de carbone, comme l'acrylonitrile, le methacrylonitrile ...
- les $\alpha$-oléfines comme l'éthylène ...
- les diènes conjugués, comme le butadiène, l'isoprène, le chloroprène,
- les monomères susceptibles de générer des chaînes polydiméthylsiloxane (PDMS). Ainsi la partie B peut être un silicone, par exemple une chaîne polydiméthylsiloxane ou un copolymère comprenant des unités diméthylsiloxy,
- le diethyleneglycolethyletheracrylate ou le diethyleneglycolethylethermethacrylate.

A titre d'exemples de monomères hydrophiles neutres $A_N$ dont peuvent dériver les unités $A_N$ du bloc A hydrophile, on peut mentionner:

- les hydroxyalkylesters d'acides $\alpha$-$\beta$ éthyléniquement insaturés comme les acrylates et méthacrylates d'hydroxyéthyle, d'hydroxypropyle, le glycérol monométhacrylate...
- les amides $\alpha$-$\beta$ éthyléniquement insaturés comme l'acrylamide, le méthacrylamide, le N,N-diméthyl méthacrylamide, le N-méthylolacrylamide ...
- les monomères $\alpha$-$\beta$ éthyléniquement insaturés portant un segment polyoxyalkyléné hydrosoluble du type polyoxyde d'éthylène, comme les polyoxyde d'éthylène $\alpha$-méthacrylates (BISOMER S20W, S10W, ... de LAPORTE) ou $\alpha$,$\omega$-diméthacrylates, le SIPOMER BEM de RHODIA (méthacrylate de polyoxyéthylène $\omega$-béhényle), le SIPOMER SEM-25 de RHODIA (méthacrylate de polyoxyéthylène w-tristyrylphényle) ...
- les monomères $\alpha$-$\beta$ éthyléniquement'insaturés précurseurs d'unités ou de segments hydrophiles tels que l'acétate de vinyle qui, une fois polymérisés, peuvent être hydrolysés pour engendrer des unités alcool vinylique ou des segments alcool polyvinylique
- les vinylpyrrolidones
- les monomères $\alpha$-$\beta$ éthyléniquement insaturés de type uréido et en particulier le méthacrylamido de 2-imidazolidinone éthyle (Sipomer WAM II de RHODIA)
- le nonethyleneglycolmethyletheracrylate ou le nonethyleneglycolmethylethermethacrylate

A titre d'exemples de monomères potentiellement cationiques $B_C$ dont peuvent dériver les unités $B_C$ du bloc B potentiellement cationique, ou à titre de monomères hydrophiles potentiellement cationiques $A_C$ dont peuvent dériver les unités $A_C$ du bloc A, on peut mentionner:

- les N,N(dialkylaminowalkyl)amides d'acides carboxyliques $\alpha$-$\beta$ monoéthyléniquement insaturés comme le N,N-diméthylaminométhyl -acrylamide ou -méthacrylamide, le 2(N,N-diméthylamino)éthyl-acrylamide ou - méthacrylamide, le 3(N,N-diméthylamino)propyl-acrylamide ou -méthacrylamide, le 4 (N,N-diméthylamino)butyl-acrylamide ou -méthacrylamide
- les aminoesters $\alpha$-$\beta$ monoéthyléniquement insaturés comme le 2(diméthyl amino)éthyl acrylate (ADAM), 2(diméthyl amino)éthyl méthacrylate (DMAM), le 3 (diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- des monomères précurseurs de fonctions amines tels que le N-vinyl formamide, le N-vinyl acétamide, ... qui engendrent des fonctions amines primaires par simple hydrolyse acide ou basique.

A titre d'exemples de monomères cationiques $B_C$ dont peuvent dériver les unités $B_c$ du bloc B cationique, ou à titre de monomères hydrophiles cationiaues $A_C$ dont peuvent dériver les unités $A_c$ du bloc A, on peut mentionner:

- les monomères ammoniumacryloyles ou acryloyloxy comme

  - le chlorure de triméthylammoniumpropylméthacrylate,
  - le chlorure ou le bromure de triméthylammoniuméthylacrylamide ou méthacrylamide,
  - le méthylsulfate de triméthylammoniumbutylacrylamide ou méthacrylamide,
  - le méthylsulfate de triméthylammoniumpropylméthacrylamide (MES),
  - le chlorure de (3-méthacrylamidopropyl)triméthylammonium (MAPTAC),
  - le chlorure de (3-acrylamidopropyl)triméthylammonium (APTAC),
  - le chlorure ou le méthylsulfate de méthacryloyloxyéthyl triméthylammonium,
  - le chlorure d'acryloyloxyéthyl triméthylammonium ; ou le méthylsulfate d'acryloyloxyéthyl triméthylammonium (ADAMQUAT Cl ou ADAMQUAT MeS),

- le bromure, chlorure ou méthylsulfate de 1-éthyl 2-vinylpyridinium, de 1-éthyl 4-vinylpyridinium ;

- les monomères N,N-dialkyldiallylamines comme le chlorure de N,N-diméthyldiallytammonium (DADMAC) ;
- les monomères polyquaternaires comme le chlorure de diméthylaminopropylméthacryiamide,N-(3-chloro-2-hydroxypropyf) triméthylammonium (DIQUAT)...

A titre d'exemples de <u>monomères anioniques ou potentiellement anioniques</u>, dont peuvent dériver des unités anioniques ou potentiellement anioniques $A_A$, on peut mentionner :

- des monomères possédant au moins une fonction carboxylique, comme les acides carboxyliques α-β éthyléniquement insaturés ou les anhydrides correspondants, tels que les acides ou anhydrides acrylique, méthacrylique, maleique, l'acide fumarique, l'acide itaconique, le N-méthacroyl alanine, le N-acryloylglycine et leurs sels hydrosolubles
- des monomères précurseurs de fonctions carboxylates, comme l'acrylate de tertiobutyle, qui engendrent, après polymérisation, des fonctions carboxyliques par hydrolyse.
- des monomères possédant au moins une fonction sulfate ou sulfonate, comme le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle, l'acrylate ou le méthacrylate de sulfopropyle et leurs sels hydrosolubles
- des monomères possédant au moins une fonction phosphonate ou phosphate, comme l'acide vinylphosphonique,... les esters de phosphates éthyléniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles.

Par exemple, le copolymère étoile peut comprendre les associations suivantes:

- bloc A «PAA» dérivant d'acide acrylique (unités $A_A$) et bloc B «PABU» dérivant d'acrylate de butyle (unités $B_{phobe}$),
- bloc A «PAM» dérivant d'acrylamide (unités $A_N$) et bloc B «PABu» dérivant d'acrylate de butyle (unités $B_{phobe}$),
- bloc A «PAM» dérivant d'acrylamide (unités $A_N$) et bloc B «PDEGA» dérivant de DEGA (unités $B_{phobe}$),
- bloc A «PAM» dérivant d'acrylamide (unités $A_N$), et bloc B «P ADAMQUAT» dérivant d'ADAMQUAT (unités $B_c$, ADAMQUAT Cl ou ADAMQUAT MeS).

### D'autres caractéristiques du copolymère

Le copolymère selon l'invention peut être présenté notamment sous forme de poudre, sous forme de dispersion dans un liquide ou sous forme de solution dans un solvant (eau ou autre). La forme dépend généralement des exigences liées à l'utilisation du copolymère. Elle peut être aussi liée au procédé de préparation du copolymère.

Le copolymère comprend de préférence au moins 10 branches, et généralement au plus environ 250 branches. Le nombre de branches peut être contrôlé, par choix du procédé de préparation, et du type de coeur utilisé. Ceci est connu de l'homme du métier. Selon un mode de réalisation particulier, le coeur est un coeur polymérique organique réticulé chimiquement, obtenu par polymérisation radicalaire contrôlée à l'aide d'un agent de contrôle ou de transfert "precursor", en présence d'une source de radicaux libres, d'un monomère réticulant R diéthyléniquement insaturé $R_{difunct}$, le coefficient de génération de branches théorique étant supérieur ou égal à 0,25. Ainsi le coeur comprend avantageusement des unités C de coeur pouvant dériver d'un monomère C de coeur, et des unités réticulantes R pouvant dériver d'un monomère réticulant R. Bien entendu il n'est pas exclu que les unités C et les monomères C comprennent plusieurs unités différentes ou dérivent des plusieurs monomères différents.

Les branches peuvent avoir une masse molaire (théorique ou mesurée) comprise entre 1000 g/mol et 100000 g/mol. Elle est de préférence comprise entre 10000 g/mol et 30000 g/mol. Dans ces branches les blocs peuvent avoir une masse molaire comprise entre 1000 g/mol et 99000 g/mol, de préférence entre 2000 g/mol et 28000 g/mol.

Dans le cadre du mode de réalisation où le bloc A est un bloc hydrophile et le bloc <u>B est un bloc hydro-phobe</u>, le rapport en poids entre le bloc A et le bloc B (A/B), est de préférence est supérieur ou égal à 40/60, de préférence supérieur ou égal à 50/50, de préférence supérieur ou égal à 65/35. Le bloc A peut par exemple avoir une masse molaire comprise entre 5000 et 20000 g/mol, et le bloc B peut par exemple avoir une masse molaire comprise entre 2000 et 10000 g/mol, le rapport étant de préférence tel que mentionné ci-dessus. Il s'agit avantageusement d'un copolymère dont le coeur est un coeur organique polymérique réticulé chimiquement.

Dans le cadre du mode de réalisation où le bloc A est un bloc hydrophile et le <u>bloc B est un bloc cationique ou potentiellement cationique</u>, le rapport en poids entre le bloc A et le bloc B (A/B), est de préférence est supérieur ou égal à 40/60, de préférence supérieur ou égal à 50/50, de préférence supérieur ou égal à 65/35. Le bloc A peut par exemple avoir une masse molaire comprise entre 5000 et 70000 g/mol, de par exemple entre 20000 et 50000, et le bloc B peut par exemple avoir une masse molaire comprise entre 1000 et 20000 g/mol, par exemple entre 2000 et 10000, le rapport étant de préférence tel que mentionné ci-dessus. Il s'agit avantageusement d'un copolymère dont le coeur est un coeur organique polymérique réticulé chimiquement.

## Procédés utiles pour la préparation du copolymère étoile

Tous les procédés permettant de préparer les copolymères étoiles tels que décrits ci-dessus peuvent être utilisés.

Des procédés particulièrement avantageux mettent en oeuvre une polymérisation contrôlée ou vivante, à l'aide d'un agent ou d'un groupe de transfert, par exemple par un procédé de polymérisation radicalaire contrôlée ou vivante. Cette polymérisation permet notamment de préparer des coeurs, des branches macromoléculaires, des blocs, des copolymères à blocs, notamment par croissance des dits coeurs, branches macromoléculaires, blocs, copolymères à blocs. De nombreux procédés de polymérisation radicalaire contrôlée ou vivent et/ou de nombreux agents ou groupes de transfert ont été décrits. Ils sont connus de l'homme du métier. On mentionne qu'il n'est pas exclu d'utiliser d'autres méthodes, notamment les polymérisations par ouverture de cycle (notamment anionique ou cationique), les polymérisations anioniques ou cationiques, les méthodes de greffage.

A titre d'exemple de procédés de polymérisation dite vivante ou contrôlée, on peut notamment se référer à :

- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 98/01478,
- le procédé décrit dans la demande WO 02/08307, notamment pour l'obtention de copolymères comprenant des bloc polyorganosiloxane,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiocarbazates de la demande WO 02/26836,
- le procédé de polymérisation radicalaire contrôlée par des agents de contrôle de type dithiophosphoroesters de la demande WO 02/10223, (éventuellement les copolymères à blocs obtenus comme ci-dessus par polymérisation radicalaire contrôlée, peuvent subir une réaction de purification de leur extrémité de chaîne soufrée, par exemple par des procédés de type hydrolyse, oxydation, réduction, pyrolyse ou substitution)
- le procédé de la demande WO 99/03894 qui met en oeuvre une polymérisation en présence de précurseurs nitroxydes,
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- le procédé de polymérisation radicalaire contrôlée par les dérivés du tetraphényléthane, divulgué par D. Braun et al. Dans Macromol. Symp. 111,63 (1996), ou encore,
- le procédé de polymérisation radicalaire contrôlée par des complexes organocobalt décrit par Wayland et al. Dans J.Am.Chem.Soc. 116,7973 (1994)
- le procédé de polymérisation radicalaire contrôlée par du diphénylethylène (WO 00/39169 ou WO 00/37507).

Les polymérisation radicalaires contrôlées ou vivantes mettant un oeuvre des agents ou groupes de transfert (ou agents de contrôle) présentant un groupe -S-CS-(Xanthates, dithioesters..) sont particulièrement intéressantes.

Un premier procédé pratique pour la préparation des copolymères étoiles est un procédé de type «Core first» (ou "coeur d'abord"). Un tel procédé peut comprendre les étapes suivantes:

- étape a) polymérisation, de préférence radicalaire contrôlée, pour obtenir un coeur polymérique réticulé chimiquement, d'une composition comprenant:

  - éventuellement au moins un monomère monoéthyléniquement insaturé de coeur (unités C de coeur),
  - au moins un monomère multiéthyléniquement insaturé (monomère réticulant R),
  - une source de radicaux libres, et
  - un agent de contrôle ou de transfert,

- étape b) éventuellement croissance d'un bloc A à partir de monomères monoéthyléniquement insaturés A par polymérisation, de préférence radicalaire contrôlée, pour obtenir un bloc A, lié au coeur:
- étape c) croissance d'un bloc B à partir de monomères monoéthyléniquement insaturés B par polymérisation de préférence radicalaire contrôlée, pour obtenir un bloc B lié au bloc A.

L'étape a) du procédé "core first" est une étape de préparation d'un coeur ou d'un microgel statistique. On appelle parfois le produit obtenu un copolymère ou polymère ou microgel de première génération.

L'étape b) du procédé "core first" est une étape de croissance d'un premier bloc à partir du coeur. On appelle parfois le produit obtenu un copolymère ou polymère ou microgel de deuxième génération.

L'étape c) du procédé "core first" est une étape de croissance d'un deuxième bloc à partir du bloc précédent. On appelle parfois le produit obtenu un copolymère ou polymère ou microgel de troisième génération.

Le monomère monoéthyléniquement insaturé de coeur (monomère C de coeur) peut être le même que celui du bloc A. Il peut éventuellement être différent. Dans ce cas, on peut le considérer comme une partie de bloc A' réticulé. De préférence il s'agit dans les deux cas d'un monomère hydrophile.

Un deuxième procédé pratique pour la préparation des copolymères étoiles est un procédé de type «Arm first» ou ("bras d'abord"). Un tel procédé peut comprendre les étapes suivantes:

- étape a') préparation, de préférence par polymérisation radicalaire contrôlées, d'un copolymère à bloc, de préférence dibloc, comprenant un bloc A et un bloc B, et présentant de préférence un groupe de contrôle ou de transfert à l'extrémité du bloc A,
- étape b') polymérisation, sur le bloc A, de préférence radicalaire contrôlée, d'une composition comprenant :

    - au moins un monomère réticulant R, de préférence multiéthyléniquement insaturé,
    - éventuellement une source de radicaux libres,
    - éventuellement un monomère de coeur (monomère C de coeur), de préférence monoéthyléniquement insaturé, et
    - un copolymère à bloc de l'étape a').

L'étape a') du procédé "arm first" est parfois appelée préparation d'un polymère ou copolymère de première génération.

L'étape b') mène au copolymère étoile et est parfois appelée obtention ou préparation d'un copolymère de deuxième génaration.

Le monomère monoéthyléniquement insaturé de coeur peut être le même que celui du bloc A. Il peut éventuellement être différent. Dans ce cas, on peut le considérer comme une partie de bloc A' réticulé. De préférence il s'agit dans les deux cas d'un monomère hydrophile.

Le copolymère à blocs de l'étape a') peut par exemple être obtenu par un procédé comprenant les étapes suivantes:

- étape a'1): préparation du bloc B par polymérisation, de préférence radicalaire contrôlée, d'une composition comprenant:

    - au moins un monomère monoéthyléniquement insaturé B
    - une source de radicaux libres, et
    - au moins un agent de contrôle,
    étant entendu que ce procédé se fait de préférence en l'absence de monomère multiéthyléniquement insaturé, puis

- étape a'2) obtention du copolymère à blocs, par croissance du bloc A sur le bloc B, par polymérisation, de préférence radicalaire contrôlée, d'une composition comprenant:

    - au moins un monomère monoéthyléniquement insaturé A, et
    - éventuellement une source de radicaux libres,
    étant entendu que ce procédé se fait de préférence en l'absence de monomère multiéthyléniquement insaturé.

De tels procédés de préparation de copolymères à blocs sont connus et ont fait l'objet de nombreuses publications.

Les monomères multiéthyléniquement insaturés (monomère réticulant R), utilisés dans le procédé "arm first" ou dans le procédé "core first" peuvent être choisis parmi des composés organiques comportant au moins deux insaturations éthyléniques et au plus 10 insaturations et connus comme étant réactifs par voie radicalaire.

De préférence, ces monomères présentent deux ou trois insaturations éthyléniques.

Ainsi, on peut notamment citer les dérivés acryliques, méthacryliques, acrylamido, méthacrylamido, ester vinylique, éther vinylique, diénique, styrénique, alpha-méthyl styrénique et allylique. Ces monomères peuvent aussi renfermer des groupements fonctionnels autres que les insaturations éthyléniques, par exemple des fonctions hydroxyle, carboxyle, ester, amide, amino ou amino substitués, mercapto, silane, epoxy ou halogéno.

Les monomères appartenant à ces familles sont le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane. Pour la famille des acrylates multifonctionnels, on peut notamment citer l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol. Concernant les éthers vinyliques, on peut notamment citer le vinyl crotonate, le diéthylène glycoldivinyléther, l'ether divinylique de butanediol-1,4, le triéthylèneglycol divinyl éther. Pour les dérivés allyliques, on peut notamment citer le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione. Pour les dérivés acrylamido, on peut notamment citer le N,N'-méthylènebisacrylamide, le N,N'-méthylènebismethacrylamide, le glyoxal bisacrylamide, le diacrylamido acide acétique. En ce qui concerne les dérivés styréniques, on peut notamment citer le divinylbenzène et le 1,3-diisopropényl benzène. Dans le cas des monomères diéniques, on peut notamment citer le butadiène, le chloroprène et l'isoprène.

Comme monomères multiéthyléniquement insaturés, on préfère le N,N'-méthylènebisacrylamide, le divinylbenzène, le diacrylate d'éthylène glycol, ou le triacrylate de triméthylolpropane.

Ces monomères multiéthyléniquement insaturés peuvent être utilisés seuls ou en mélanges. Par ailleurs, ils sont polymérisés de préférence en présence de monomères de coeur, de préférence monoéthyléniquement insaturés.

Pour les étapes de formation du coeur (étape a ou b'), La fraction molaire de monomères multiéthyléniquement insaturés par rapport aux monomères monoéthyléniquement insaturés de coeur est avantageusement comprise entre 0,001 et 1. De préférence la fraction molaire est comprise entre 0,01 et 1.

Les premières étapes des procédés (étape a ou a' plus précisément a'1) sont mises en oeuvre en présence d'une source de radicaux libres. Cependant, pour certains monomères, tels que le styrène, les radicaux libres permettant d'initier la polymérisation peuvent être générés par le monomère monoéthyléniquement insaturé, à des températures suffisamment élevées généralement supérieures à 100°C. Il n'est pas, dans ce cas, nécessaire d'ajouter une source de radicaux libres supplémentaires.

La source de radicaux libres utile est généralement un initiateur de polymérisation radicalaire. L'initiateur de polymérisation radicalaire peut être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N, N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl) éthyl] propionamide), le 2,2'-azobis[2-méthyl-N-(2-hydroxyéthyl) propionamide], le 2,2'-azobis(isobutyramide) dihydrate,

- les systèmes redox comportant des combinaisons telles que :

- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs, et

- les persulfates de métal alcalin en association avec un acide arylphosphinique, tel que l'acide benzène phosphonique et autres similaires, et des sucres réducteurs.

La quantité d'initiateur à utiliser est déterminée de préférence de manière à ce que la quantité de radicaux générés soit d'au plus 50 % en mole, de préférence d'au plus 20 % en mole, par rapport à la quantité d'agent de contrôle ou de transfert.

Les polymérisation peuvent être effectuées sous toute forme physique appropriée, par exemple en solution dans l'eau ou dans un solvant par exemple un alcool ou le THF, en émulsion dans l'eau (procédé dit "latex"), en masse, le cas échéant en contrôlant la température et/ou le pH afin de rendre des espèces liquides et/ou solubles ou insolubles.

Après mise en oeuvre des procédés de préparation décrits ci-dessus, on mentionne qu'il est possible de désactiver ou d'éliminer ou de détruire d'éventuels groupes de transfert présents dans le copolymère étoile, par exemple par hydrolyse, ozonolyse, ou réaction avec des amines.

On précise que les copolymères selon l'invention sont de préférence obtenu directement après la polymérisation et l'éventuelle désactivation, élimination ou destruction de groupes de transfert, sans étape de fonctionnalisation du copolymère après la polymérisation. A ce titre le bloc B hydrophobe est de préférence différent d'un aduit de réaction entre des groupes fonctionnalisables portés par des unités polymérisées et un composé hydrophobe. Le bloc B hydrophobe est notamment différent d'un bloc comprenant des unités hydrophobes étant des aduits de réaction entre des unités de type methacrylate de glycidyle et de l'acide para-nitrobenzoïque.

Tensioactif

Le tensioactif peut en outre être un tensioactif anionique ou non ionique. Il peut également s'agir d'un mélange de tensioactifs comprenant un tensioactif anionique et/ou un tensioactif non ionique.

Selon un mode de réalisation, avantageux lorsque le bloc A est hydrophile et le bloc B est hydrophobe, la composition comprend un tensioactif non ionique.

Selon un autre mode de réalisation, avantageux lorsque le bloc A est hydrophile et le bloc B est hydrophile cationique, la composition comprend un tensioactif anionique.

A titre de <u>tensioactifs non ioniques</u>, on cite notamment:

- les phénols polyalcoxylés (éthoxylés, propoxylés, éthopropoxylés) substitués par au moins un radical alkyle en $C_4$-$C_{20}$, de préférence en $C_4$-$C_{12}$, ou substitués par au moins un radical alkylaryle dont la partie alkyle est en $C_1$-$C_6$. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés. Parmi les di- ou tristyrylphénols éthoxylés et/ou propoxylés, sulfatés et/ou phosphatés, on peut citer, le di-(phényl-1 éthyl)phénol éthoxylé, contenant 10 motifs oxyéthylénés, le di-(phényl-1 éthyl)phénol éthoxylé, contenant 7 motifs oxyéthylénés, le di-(phényl-1 éthyl)phénol éthoxylé sulfaté, contenant 7 motifs oxyéthylénés, le tri-(phényl-1 éthyl)phénol éthoxylé, contenant 8 motifs oxyéthylénés, le tri-(phényl-1 éthyl)phénol éthoxylé, contenant 16 motifs oxyéthylénés, le tri-(phényl-1 éthyl)phénol éthoxylé sulfaté, contenant 16 motifs oxyéthylénés, le tri-(phényl-1 éthyl) phénol éthoxylé, contenant 20 motifs oxyéthylénés, le tri-(phényl-1 éthyl)phénol éthoxylé posphaté, contenant 16 motifs oxyéthylénés.
- les alcools ou les acides gras en $C_6$-$C_{22}$, éventuellement polyalcoxylés (éthoxylés, propoxylés, éthopropoxylés). Dans le cas où ils sont présents, le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
- les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par transestérification d'un triglycéride par un polyéthylèneglycol.
- les esters de sorbitan, éventuellement polyalcoxylés (éthoxylés, propoxylés, éthopropoxylés), plus particulièrement les esters de sorbitol cyclisé d'acides gras de $C_{10}$ à $C_{20}$ comme l'acide laurique, l'acide stéarique ou l'acide oléique, et comprenant un nombre total de motifs alcoxylés compris entre 2 et 50.
- les alkyles ou alcools polyalcoxylés (éthoxylés, propoxylés, ou éthopropoxylés), par exemple, les alkyles ou alcools en $C_4$-$C_{30}$, de préférence en $C_{10}$-$C_{18}$, de préférence en $C_{12}$-$C_{16}$, linéaires ou branchés, comprenant de 2 à 30 motifs éthoxy et/ou propoxy, de préférence de 2 à 10 motifs éthoxy.

Les tensioactifs non ioniques polyéthoxylés peuvent être avantageusement utilisés.

A titre de <u>tensioactifs anioniques</u>, on cite notamment:

- les acides alkylsulfoniques, les acides arylsulfoniques, éventuellement substitués par un ou plusieurs groupements hydrocarbonés, et dont la fonction acide est partiellement ou totalement salifiée, comme les acides alkylsulfoniques en $C_8$-$C_{50}$, plus particulièrement en $C_8$-$C_{30}$, de préférence en $C_{10}$-$C_{22}$, les acides benzènesulfoniques, les acides naphtalènesulfoniques, substitués par un à trois groupements alkyles en $C_1$-$C_{30}$, de préférence en $C_4$-$C_{16}$, et/ou alcényles en $C_2$-$C_{30}$, de préférence en $C_4$-$C_{16}$.
- les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en $C_2$-$C_4$ (de préférence éthoxylés, propoxylés, éthopropoxylés).
- les esters phosphates choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé, éthopropoxylé). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono- et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyles ; de l'acide phosphorique et d'un alcool en $C_8$-$C_{30}$, de préférence en $C_{10}$-$C_{22}$ alcoxylé (éthoxylé ou éthopropoxylé); de l'acide phosphorique et d'un alcool en $C_8$-$C_{22}$, de préférence en $C_{10}$-$C_{22}$, non alcoxylé.

- les esters sulfates obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en $C_8$-$C_{20}$, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en $C_2$-$C_{30}$, saturés ou insaturés, et dans lesquels le nombre de motifs alcoxylés est compris entre 2 et 40 ; les esters sulfates obtenus à partir de mono-, di- ou tristyrylphénol polyalcoxylés dans lesquels le nombre de motifs alcoxylés varie de 2 à 40.

Les tensioactifs anioniques peuvent être sous forme acide (il sont potentiellement anioniques), ou sous une forme partiellement ou totalement salifiée, avec un contre-ion. Le contre-ion peut être un métal alcalin, tel que le sodium ou le potassium, un alcalino-terreux, tel que le calcium, ou encore un ion ammonium de formule $N(R)_4^+$ dans laquelle R, identiques ou différents, représentent un atome d'hydrogène ou un radical alkyle en $C_1$-$C_4$ éventuellement substitué par un atome d'oxygène.

La composition peut également comprendre des tensioactifs cationiques, amphotères et/ou zwitterioniques.

Compositions - Forme physique - Gels

Le copolymère étoile, le tensioactif éventuellement présent et leurs quantités, sont de préférence tels que la composition est sous forme d'un gel viscoélastique.

Pour le mode de réalisation dans lequel le bloc A est hydrophile et le bloc B est hydrophobe, le tensioactif non ionique et sa quantité sont de préférence tels que la composition soit sous la forme d'un gel viscoélastique.

Dans ce mode de réalisation on peut utiliser comme un paramètre le nombre Z, exprimant le rapport entre la quantité en moles de tensioactif $n_{TA}$ et la quantité en moles d'unités du bloc B $n_{bloc\ B}$ ($Z = n_{TA}/n_{bloc\ B}$, le nombre en moles d'unités du bloc B). De manière avantageuse, Z est tel que la composition soit sous la forme d'un gel viscoélastique à température ambiante, ou alors telle que la composition forme un gel viscoélastique sous l'effet de la chaleur. Lors de l'ajout du tensioactif, on augmente Z. Dans des modes intéressants, la formation d'un gel, et/ou sa force varie selon Z, la gélification étant la plus élevée à une valeur $Z_{max}$ d'environ 1. On peut ainsi contrôler la formation d'un gel, et/ou sa force, par control du paramètre Z, avantageusement par simple ajout de tensioactif. Pour une valeur Z donnée, une gélification peut être obtenue par chauffage. On peut ainsi contrôler la formation d'un gel, et/ou sa force. A Z donné, la force du gel augmente quand la température augmente.

Pour le mode de réalisation dans lequel le bloc A est hydrophile et le bloc B est hydrophile cationique, le tensioactif anionique et sa quantité sont de préférence tels que la composition soit sous la forme d'un gel viscoélastique.

Dans ce mode de réalisation on peut utiliser comme un paramètre le nombre Z, exprimant le rapport entre la quantité en moles de tensioactif $n_{TA}$ et la quantité en moles d'unités du bloc B $n_{bloc\ B}$ ($Z = n_{TA}/n_{bloc\ B}$). De manière avantageuse, Z est tel que la composition soit sous la forme d'un gel viscoélastique à température ambiante. Lors de l'ajout du tensioactif, on augmente Z. Dans des modes intéressants, la formation d'un gel, et/ou sa force varie selon Z, la gélification étant la plus élevée à une valeur $Z_{max}$ d'environ 1. On peut ainsi contrôler la formation d'un gel, et/ou sa force, par control du paramètre Z.

De préférence:

- la composition comprend de 2 à 10% en poids de l'ensemble du copolymère étoile et du tensioactif, et
- le rapport en masse entre tensioactif et le copolymère étoile est compris entre 0 et 50/50, de préférence entre 10/90 et 50/50.

Selon un mode de réalisation intéressant, la composition comprend:

- de l'eau
- de 0,1 à 20%, de préférence de 0,5 à 15%, de préférence de 1 à 5%, pour un copolymère dont le bloc B est un bloc hydrophobe, ou de 2 à 12% pour un copolymère dont le bloc B est un bloc cationique, en poids de l'ensemble (copolymère + tensioactif éventuel),
- le rapport en poids entre le copolymère et le tensioactif s'il est présent étant supérieur à 1/3, de préférence compris entre ½ et ¾.

Les compositions selon l'invention présentent des propriétés rhéologiques intéressantes à relativement faible taux de copolymère, et peuvent notamment constituer des systèmes rhéologiques rhéofluidifiants et thermoépaississants. En particulier elles peuvent présenter un comportement dans lequel la force du gel augmente avec la température. Une telle propriété, de plus à relativement faible taux de copolymère, est inattendue et peut permettre des applications ou utilisations très intéressantes notamment dans les domaines de l'exploitation des gisements de pétrole ou de gaz.

Ainsi la composition peut être un fluide pour l'exploitation de gisements de pétrole ou de gaz, de préférence un fluide de fracturation. De tels fluides, et de telles utilisations sont décrits plus bas

Autres ingrédients - pH

La composition selon l'invention peut en outre comprendre au moins un sel soluble dans la composition, présent à une teneur d'au moins 0,01 % en poids par rapport au poids de la composition et inférieure à la limite de solubilité du ou des sels dans ladite composition.

A titre de sels solubles convenables, on peut citer entre autres les chlorures de métaux alcalins ou alcalino-terreux, les iodures, les sulfates, les carbonates, les bicarbonates, les phosphates, les silicates, de métaux alcalins, seuls ou en mélange. L'eau de la composition peut en outre être de l'eau de mer, ou une eau comprenant de la saumure, ou des sels compris dans des formations traversées par un forage pour l'exploitation des gisements de pétrole ou de gaz.

La composition peut notamment comprendre des agents de modification du pH ou de contrôle du pH. Le pH est avantageusement de 5 à 9.

La composition peut en outre comprendre des ingrédients ou utiles dans les domaines d'utilisations des copolymères déjà mentionnés plus hauts, et dans les domaines d'utilisation des compostions détaillés plus bas, en particulier dans le domaine de l'exploitation des gisements de pétrole ou de gaz.

Procédé de préparation des compositions et/ou de contrôle de la formation de gels

Les compositions selon l'invention peuvent être préparées par mise en présence des différents ingrédients, notamment l'eau, le copolymère étoile, et éventuellement le tensioactif. On mentionne qu'on peut mettre en oeuvre des pré-mélanges de certains de ingrédients ou de parties de ces ingrédients. La mise en présence des ingrédients peut être suivie d'une agitation plus ou moins énergique, et/ou d'un chauffage, et/ou d'un ajout de tensioactif (ou d'une quantité supplémentaire de tensioactif).

Un procédé de contrôle de la formation de gels viscoélastiques, par exemple d'un procédé de préparation de tels gels, peut par exemple comprendre les étapes suivantes:

    a) préparer une composition aqueuse telle que décrite ci-dessus, comprenant:

- de l'eau,
- un copolymère tel que décrit ci-dessus,
- éventuellement un tensioactif tel que décrit ci-dessus,

    b) former un gel par agitation et/ou par ajout de tensioactif et/ou chauffage.

Sans vouloir être lié à une quelconque théorie, on pense qu'un copolymère étoile (dont le bloc B est un bloc hydrophobe) forme un double réseau comprenant une famille de noeuds de réticulation chimique constituée des coeurs, et une famille de noeuds de réticulation physique constituée de nodules (micelles) comprenant des blocs B provenant d'étoiles distinctes. En présence d'eau, on pense que le (double) réseau gonfle pour former un gel. En ajoutant de l'eau progressivement, le réseau peut gonfler pour former un gel, jusqu'à une limite, liée à la fraction volumique d'eau, à partir de laquelle le gonflement est maximal et toute introduction d'eau supplémentaire mène à une composition comprenant une phase sous forme de gel et une phase aqueuse séparée. Au-delà de cette limite, une agitation plus vigoureuse ou plus longue, et/ou un chauffage peuvent permettre d'obtenir un gel monophasique. On pense que l'agitation et/ou le chauffage permettent d'ouvrir des nodules (micelles) du réseau, et donc d'incorporer plus d'eau. La possibilité d'incorporer des quantités importantes d'eau permet la réalisation de compositions comprenant une faible proportion de copolymère étoile, ce qui est économiquement avantageux (le copolymère est plus actif).

On pense que la présence de tensioactif non ionique dans le système module des interactions entre blocs B, et/ou module la formation des nodules (micelles). Ces modulations peuvent par exemple induire des interactions plus lâches entre les blocs B et/ou induire de plus grandes possibilités d'ouverture des nodules (micelles) du réseau, et donc permettre d'incorporer plus d'eau. On mentionne qu'au-delà d'une certaine quantité de tensioactif, il est possible que la deuxième famille de noeud disparaisse (nodules complètement ouverts). On peut donc préférer utiliser une quantité efficace de tensioactif. Alternativement, si le tensioactif est un tensioactif à nombre d'agrégation dépendant de la température (par exemple un tensioactif non ioniques tel qu'un alcool polyéthoxylé), et si on se place au-delà de la quantité efficace à une température, on peut augmenter la température pour former un gel. On pense que le chauffage induit une réorganisation ou une réapparition des nodules (par agrégation du tensioactif avec la température). On peut ainsi réaliser un système thermogéllifiant réversible.

Ainsi, selon un mode de réalisation, on peut former un gel par le procédé suivant:

    a) on prépare une composition aqueuse comprenant de l'eau et le copolymère étoile et ne comprenant pas de tensioactif,

b) on agite vigoureusement et/ou on chauffe pour former un gel.

Ce mode de réalisation peut notamment être mis en oeuvre avec des copolymères dont le bloc B est hydrophobe.

Selon un autre mode de réalisation:

a) on prépare une composition aqueuse comprenant de l'eau et le copolymère étoile et ne comprenant pas de tensioactif,
b) le gel est formé par ajout d'une quantité efficace du tensioactif.

Ce mode de réalisation peut notamment être mis en oeuvre avec des copolymères dont le bloc B est hydrophobe ou cationique.

Selon un autre mode de réalisation:

a) on prépare une composition comprenant de l'eau, le copolymère étoile et une quantité de tensioactif supérieure à la quantité efficace pour former un gel, et
b) le gel est formé par chauffage.

Ce mode de réalisation peut notamment être mis en oeuvre avec des copolymères dont le bloc B est hydrophobe, et le tensioactif est un tensioactif non ionique, par exemple un alkyle polyalcoxylé, de préférence un alcool polyéthoxylé.

Ainsi:

- le procédé peut être mis en oeuvre lors de l'exploitation de gisements de pétrole ou de gaz, la composition aqueuse étant un fluide de fracturation, et le chauffage éventuel étant assuré par la température du gisement.

Utilisation des compositions

Les compositions peuvent notamment être des compositions mises en oeuvre dans les domaines de la cosmétique (par exemple des shampoings, après-shampoings, des gel-douche), des soins ménagers, du nettoyage industriel ou institutionnel (par exemple des produits pour le nettoyage des surfaces dures ou des lessives liquides), dans les domaines de l'exploitation des gisements de pétrole ou de gaz.

Ainsi la présente invention a de plus pour objet l'utilisation de la composition qui vient d'être détaillée, en tant que fluide pour l'exploitation de gisements de pétrole ou de gaz, tel qu'un fluide de forage ou qu'un fluide de stimulation. L'utilisation est particulièrement avantageuse pour la simulation des puits de pétrole, et plus particulièrement pour la fracturation. L'invention concerne donc de préférence l'utilisation de la composition, en tant que fluide de fracturation. L'utilisation comme fluide de stimulation, selon l'invention, et plus particulièrement comme fluide de fracturation, est particulièrement avantageuse à des températures d'exploitation relativement élevées, de l'ordre de 120°C à 150°C. Le pH est généralement de 8 à 10, et souvent supérieur à 9. On n'observe pas, avec un fluide selon l'invention, de dégradations importantes et/ou rapides des propriétés viscoélastiques, qui pourraient rendre ledit fluide difficilement utilisable. L'opération de fracturation peut avantageusement être une fracturation avec du dioxyde de carbone, dans laquelle on injecte du dioxyde de carbone liquide dans le fluide de fracturation. L'utilisation en tant que fluide de fracturation peut avantageusement être une utilisation en tant que fluide de fracturation avec un gaz tel que l'air, l'azote, le dioxyde de carbone, le fluide comprenant par exemple du dioxyde de carbone liquide.

L'utilisation d'un fluide de fracturation consiste à injecter le fluide dans le puits à un débit, une pression et un taux de cisaillement suffisants pour créer des fissures dans les roches traversées, et ainsi augmenter la perméabilité des roches comprenant le pétrole ou le gaz.

Des techniques de fracturation sont notamment décrites dans le brevet US 5,551,516, et dans « Oilfield Applications », Encyclopedia of Polymer Science and Engineering, vol. 10, pp 328-366.

Le fluide de fracturation comprend en général des particules solides dont le rôle est de maintenir ouvertes les fissures créées lors de l'opération de fracturation. Les particules sont dispersées, par exemple en suspension, dans le fluide, transportées dans les fissures. Elles empêchent celles-ci de se refermés lorsque la pression diminue dans la roche, à cause d'une dégradation, subie ou provoquée, de viscosité du fluide, ou à cause d'une opération volontaire sur le débit, la pression ou le taux de cisaillement.

Plus particulièrement, ces particules solides peuvent être choisies parmi le sable, le quartz, le quartz siliceux, la bauxite frittée, les perles de verre, les perles de céramique, les particules d'aluminium, des fragments de coquilles de noix, etc. La granulométrie de ces particules est typiquement de 20-40 mesh. Usuellement, la quantité de particules solides dans le fluide est comprise entre 0,2 et 0,3 kg de particules par litre de fluide de fracturation.

Il est à noter que les fluides de fracturation peuvent comprendre des agents stabilisants thermiques (thermal stabilizing agents), comme par exemple les thiosulfates et thiosulfites de sodium, la thiourée, le méthanol, l'éthylène glycol, l'isopropanol, etc.

Le cas échéant, le fluide de fracturation peut comprendre un additif limitant le gonflement des argiles, comme par exemple, le chlorure de potassium, le chlorure de calcium, le sulfate de calcium (gypse) etc. Généralement, la teneur en ce type de composés, lorsqu'ils sont présents, est comprise entre 1 et 4 % en poids du fluide.

Le fluide de fracturation peut bien entendu comprendre d'autres éléments usuellement utilisés dans le domaine, tels que antimousse ou des inhibiteurs de tartre.

L'obtention de ces fluides est réalisées par simple mélange des divers éléments qui les constituent dans les proportions souhaitées.

L'invention concerne de même l'utilisation du fluide aqueux en tant que fluide de forage ou de stimulation, en particulier en tant que fluide de fracturation, dans le domaine de l'exploitation de gisements de pétrole ou de gaz.

Outre le copolymère de l'invention et éventuellement le tensioactif, les fluides de forage peuvent comprendre des agents fluidifiants ou dispersants.

Ainsi, peuvent entrer dans la composition des fluides de forages, des polyphosphates, des tannins, des lignosulfonates, des dérivés de lignine, des tourbes et lignites, des polyacrylates, des polynaphtalène sulfonates, seuls ou en mélange.

La quantité d'agent fluidifiant ou dispersant est variable. A titre indicatif, celle-ci est comprise entre 0 et 1% par rapport au poids du fluide.

Le fluide de forage peut de plus comprendre au moins un réducteur de filtrat, qui sont des composés s'adsorbant sur les roches constituant les parois du puits, limitant de ce fait la diffusion à travers les parois du forage des divers éléments constitutifs du fluide.

A titre d'exemples de composés de ce type, on peut citer sans intention de s'y limiter, les composés cellulosiques, les polyacrylamides, les polyacrylates de haut poids moléculaire, les succinoglycanes, l'amidon natif ou ses dérivés, le charbon. Parmi les composés cellulosiques, les celluloses non modifiées ou modifiées chimiquement comme les carboxyméthylcelluloses, les hydroxyéthylcelluloses, les carboxyéthylhydroxyéthylcelluloses sont des composés convenant comme réducteur de filtrat. Bien entendu rien n'empêche d'employer ces produits en combinaison si les conditions le rendent nécessaire.

La quantité de réducteur de filtrat dépend fortement de la nature des roches traversées. Cependant, à titre indicatif, celle-ci est habituellement comprise entre 0 et 1 % par rapport au poids total du fluide

Le fluide selon l'invention peut comprendre un capteur d'oxygène. Ce type d'additif a pour objet de piéger l'oxygène présent dans les boues de forages et qui peuvent entraîner une dégradation de certains additifs.

Parmi les produits de ce type, on peut citer par exemple les hydroxylamines, l'hydrazine, les sulfites, les bisulfites, les hydrosulfites. De préférence, on utilise de l'hydrazine, qui peut être sous une forme anhydre ou hydratée, sous forme de sels comme par exemples les chlorures, sulfates, ou encore sous forme de carbohydrazide.

Généralement la teneur en additif de ce type varie entre 0 et 0,25% en poids du fluide.

Le fluide peut comprendre de plus, au moins un composé alourdissant et/ou au moins un colloïde minéral. Les éléments alourdissants contribuent à maintenir une pression hydrostatique suffisante dans le puits et à maintenir en suspension les roches entraînées lors de l'opération de forage. De tels composés sont classiquement choisis parmi les sels solubles précédemment cités et les sels peu ou très peu solubles. Parmi les sels peu solubles, on peut citer sans intention de s'y limiter, les sulfates, silicates ou carbonates de métaux alcalino-terreux, comme le sulfate de baryum, le carbonate de calcium.

On peut de même utiliser des bromures de métaux alcalino-terreux ou de zinc tels que le bromure de potassium, le bromure de zinc. On peut aussi utiliser des oxydes ou sulfure ou sous arséniate de fer. On peut également utiliser le sulfate de strontium, voire dans certains cas de forte densité du Galene (sulfure de plomb).

Les colloïdes minéraux, qui sont des composés substantiellement insolubles dans les conditions d'utilisation du fluide selon l'invention, sont des agents modifiant la rhéologie du milieu et permettant de maintenir les déblais en suspension dans ce dernier. L'attapulgite, la baryte, la bentonite, seules ou en mélange, en sont les exemples les plus couramment utilisés. Il est à noter que si l'on met en oeuvre un fluide comprenant un colloïde minéral, ce dernier sera de préférence de l'attapulgite.

Les teneurs en alourdissants et en colloïdes minéraux dépendent de plusieurs facteurs qui ne sont pas uniquement techniques. En effet, si ces teneurs sont bien évidemment fixées en fonction de la nature des sols traversés, l'importance du coût engendré par l'usage de ces additifs est prise en compte (présence sur place ou non, coût, etc.).

On peut également ajouter au fluide, si nécessaire, des sels minéraux pour favoriser la précipitation de certains ions, s'ils sont présents, et en particulier des ions divalents. On peut mentionner par exemple l'addition de carbonate de soude pour précipiter le calcium, ou le bicarbonate de soude pour précipiter la chaux, notamment lors de reforages dans le ciment. On peut encore citer l'addition de gypse ou de chlorure de calcium pour limiter le gonflement des argiles, l'addition d'hydroxyde de calcium, ou de chaux éteinte, pour débicarbonater des boues contaminées par du dioxyde de carbone.

La teneur en sels est fonction des roches traversées et des eaux disponibles sur le site d'exploitation et l'on peut effectuer les opérations en présence de fluides saturés en sels.

Bien évidemment, le fluide selon la présente invention peut comprendre des additifs habituels de la classe des polysaccharides de haut poids moléculaire, comme le succinoglycane, le wellan, le gellan, utiles en tant que viscosants.

D'autres additifs classiques pour des applications concernant l'exploitation de gisements pétroliers peuvent entrer dans la composition du fluide (fluide de forage ou fluide de stimulation, tel qu'un fluide de fracturation). Ainsi, on peut mentionner les agents de transfert de radicaux libres, comme les alcools inférieurs, les thiourées, l'hydroquinone ; les biocides, les agents chélatants, les tensioactifs, des anti-mousses, des agents anti-corrosion par exemple.

On mentionne enfin que le fluide aqueux selon l'invention peut être utilisé en tant que fluide pour l'évacuation de produits d'excavation, notamment dans les secteurs de la construction en zones profondes, de la réalisation de tunnels ou de puits, ou dans le secteur minier. Les produits d'excavation sont dans ces applications mis en suspension dans le fluide, par introduction du fluide dans la zone d'où ils doivent être éliminés. Le document US 5,439,317 dans des exemples d'applications d'excavations.

D'autres détails ou avantages de l'invention pourront apparaître au vu des exemples qui suivent, sans caractère limitatif.

## EXEMPLES

## Exemples de synthèse:

Dans les exemples de synthèse donnés ci-dessous, les réactions de polymérisation sont effectuées sous léger balayage d'argon dans de simples appareillages en verre immergés dans un bain d'huile préchauffé à 70°C.

Comme générateurs de radicaux libres, on utilise le 4, 4'-azobis- de l'acide 4-cyanopentanoïque (ACP), le 4,4'-azo-isobutyronitrile (AIBN) ou le persulfate de sodium ($Na_2S_2O_8$).

Le réticulant utilisé dans les exemples suivant est le N, N'-méthylène-(bis) acrylamide (MBA).

On opère selon un procédé de type "arm first", par préparation d'un copolymère à blocs dibloc, dit "polymère de première génération", (étape a'), puis réticulation par polymérisation avec un réticulant pour former un coeur (étape b').

La conversion du polymère de première génération est évaluée par l'analyse des (co)polymères par chromatographie d'exclusion stérique (SEC), ou par chromatographie gaz (GC) des monomères résiduels, ou par chromatographie liquide à haute performance (HPLC). Les masses molaires moyennes en nombre $M_n$ (g.mol$^{-1}$) sont exprimées en équivalents poly(oxyde d'éthylène) pour les blocs hydrophiles et en polystyrène pour les blocs hydrophobes. La distribution des masses molaires est évaluée par l'indice de polymolécularité ($I_p$) correspondant au rapport de la masse molaire moyenne en masse et de la masse molaire moyenne en nombre ($I_p = M_w/M_n$). Ces exemples montrent que la masse molaire moyenne en nombre des polymères de première génération issus de la polymérisation radicalaire des monomères éthyléniquement insaturés est déterminée par le rapport molaire initial entre le monomère et l'agent de contrôle (Xanthate). La détection UV à 290 nm en chromatographie SEC nous renseigne sur la présence du fragment d'agent de contrôle au bout des chaînes polymères, caractéristique du caractère contrôlé de la polymérisation.

Abréviations des monomères dans les examples:

AA = acide acrylique
ABU = acrylate de butyle
ADAMQUAT = acrylate de triméthyle ammonium éthyle sulfate de méthyle
AM = acrylamide
MBA = N,N'-méthylène-(bis) acrylamide

Exemple 1: Préparation d'un copolymère étoile [coeur P (AA-MBA)]-[-branches P(AA-bloc-ABU)]$_{42}$ (le nombre de branches mesuré d'environ 42)

A'/ Synthèse du copolymère dibloc P(ABU(5k)- bloc-AA (10k)), de première génération

Dans un ballon bi-cols surmonté d'un condenseur, on ajoute 4,17 g ($2\times10^{-2}$ mol) du xanthate EtOC (=S)SCH(CH$_3$)COOCH$_3$, à 100,0 g (0,78 mol) d'acrylate de butyle ABU dans 104,82 g d'éthanol. Le mélange réactionnel est soumis à un bullage d'argon pendant 20 min, puis porté à 70 °C. A cette température 0,656 g ($4\times10^{-3}$ mol) d'AIBN, dissout dans 3 ml d'éthanol, est introduit goutte à goutte sur une période de 45 min. Après 3 heures de réaction à 70°C, un aliquote est prélevé pour être analysé en SEC. On ajoute alors 0,56 g ($2\times10^{-3}$ mol) d'ACP au mélange réactionnel. Un mélange de 200 g (2,78 mol) d'acide acrylique AA, 1,12 g ($4\times10^{-3}$ mol) d'ACP dans 135,20 g d'éthanol est introduit en continu sur une durée de 2h au mélange réactionnel. A la fin de l'introduction en continue, le recuit est maintenu 2h avant un dernier ajout de 0,12 g ($3,84\times10^{-4}$ mol) d'ACP. Enfin, le recuit est maintenu 4h supplémentaires.

Analyse SEC :

Premier bloc de PABU : $M_n$ = 4900 g.mol$^{-1}$ et $I_p$ = 1.63

Après hydrolyse à la soude (NaOH) du dibloc P(ABU-b-AA), on obtient $M_n$ = 10120 g.mol$^{-1}$ et $I_p$ = 1.70, ce qui correspond à un deuxième bloc PAA de $M_n$ = 7525 g.mol$^{-1}$.

B'/ Obtention du polymère étoile [coeur P(AA-MBA)]-[-branches P(AA10k-bloc-ABU5k)],

Dans un ballon bi-cols surmonté d'un condenseur, on ajoute 22 g d'une solution d'éthanol contenant 45,45 % massique de polymère di-bloc P(ABU-5K-block-AA-10K), (soit 10 g de matière sèche de di-bloc), à 78,0 g d'éthanol. Le mélange réactionnel est soumis à un bullage d'argon pendant 20 min, puis porté à 70 °C. A cette température on ajoute 0,0374 g ($1,33\times10^{-4}$ mol) d'ACP. Un mélange de 1,00 g ($1,39\times10^{-2}$ mol) d'acide acrylique, 2,05g ($1,33\times10^{-2}$ mol) de MBA dans 28,15 g d'éthanol est alors ajouté en continu dans le milieu réactionnel sur une durée de 2h. A la fin de l'introduction en continue, le recuit est maintenu 2h avant un dernier ajout de 0,0374 g ($1,33 \times 10^{-4}$ mol) d'ACP. Enfin, le recuit est maintenu 6h supplémentaires.

Le coefficient de génération de branches théorique est d'environ 20.

La masse molaire moyenne mesurée est d'environ $M_{star}$ = 1,14E+06 g/mol.

Le nombre de bras mesuré est d'environ 42

Exemple 2: Préparation d'un copolymère étoile [coeur P(AM-MBA)] - [-branches P(AM - bloc-ADAMQUAT)] - Nombre de branches non mesuré

A'/ Synthèse du copolymère dibloc P(ADAMQUAT (5,4k)- bloc-AM(19,6k)), de première génération

Dans un ballon bi-cols surmonté d'un condenseur, on ajoute 1,93 g ($9,3 \times 10^{-3}$ mol) du xanthate EtOC(=S)SCH(CH$_3$)COOCH$_3$ à 87,71 g d'une solution d'ADAMQUAT dans l'eau à 57 % massique, (soit 50 g (0,186 mol) d'ADAMQUAT), à un mélange comprenant 39,27 g d'éthanol et 12,50 g d'eau déionisée. Le mélange réactionnel est porté à 70 °C. A cette température 0,424 g ($1,86 \times 10^{-3}$ mol) de péroxodisulfate d'ammonium (Na$_2$S$_2$O$_8$) est ajouté en une fois. Après 6 heures de recuit à 70°C, le mélange réactionnel est refroidit à température ambiante et précipité dans un large excès de dichlorométhane. Après filtration et séchage, le P(ADAMQUAT) est remis en solution dans de l'eau déionisée pour obtenir une solution à 57 % massique de matière sèche.

Dans un ballon bi-cols surmonté d'un condenseur, on introduit 35,09 g de cette solution aqueuse de P(ADAMQUAT), soit 20 g de polymère sec dans 15,09 g d'eau déionisée. On chauffe la solution à 70 °C et on introduit alors 0,212 g ($9,3 \times 10^{-4}$ mol) de péroxodisulfate d'ammonium (Na$_2$S$_2$O$_8$). On ajoute en continu sur 3 h 175,76 g d'une solution aqueuse à 30 % massique d'acrylamide (AM), soit 52,73 g (0,743 mol) d'AM. Durant cette introduction en continu d'AM, on fait deux ajouts, après une heure et après deux heures, de 0,106 g ($4,64 \times 10^{-4}$ mol) de péroxodisulfate d'ammonium (Na$_2$S$_2$O$_8$). A la fin de l'ajout en continu d'AM, le recuit est maintenu 2h supplémentaires.

B'/ obtention du polymère étoile [coeur P(AM-MBA)] - [-branches P(AM19,6k -bloc-ADAMQUAT5,4k)]:

Dans un ballon bi-cols surmonté d'un condenseur, on ajoute 28,57 g d'une solution aqueuse contenant 35 % massique de polymère di-bloc P(ADAMQUAT (5,4k)- bloc-AM-(19,6k)), (soit 10 g de matière sèche de di-bloc), à 71,85 g d'eau déionisée. Le mélange est porté à 70 °C. A cette température on ajoute 0,0233 g ($1,02 \times 10^{-4}$ mol) de péroxodisulfate d'ammonium (Na$_2$S$_2$O$_8$). Un mélange contenant 8,50 g d'une solution aqueuse à 30% massique d'acrylamide, (soit 2,55g

($3,59 \times 10^{-2}$ mol) d'acrylamide), 0,393 g ($2,55 \times 10^{-3}$ mol) de MBA et 0,0233 g ($1,02 \times 10^{-4}$ mol) de péroxodisulfate d'ammonium (Na$_2$S$_2$O$_8$) dans 20,55g d'eau déionisée, est ajouté en continu sur 3h au mélange réactionel. A la fin de l'introduction en continue, le recuit est maintenu 9h supplémentaires.

Exemple 3: Préparation d'un gel comprenant le polymère étoile de l'exemple 1

On mélange dans un bécher :

- 97 g d'eau désionisée ;
- 1.70 g (en sec) de polymère de l'exemple 1 ;
- 0.31 g d'hydroxyde de sodium NaOH
- 1.30 g de tensioactif C13EO6 (CH$_3$-(CH$_2$)$_{12}$-(O-CH$_2$-CH$_2$)$_6$-OH)

Après agitation, la présente formulation donne un gel monophasique transparent.

Les propriétés rhéologiques de ce gel sont évaluées sur un rhéomètre CSL$^2$100 Carrimed Rheometer de TA Instruments, en utilisant une géométrie cône-plan (4 cm de diamètre, 1° d'angle de cône).

A température constante de l'ordre de l'ambiante, 25°C, on étudie le comportement à gradient de cisaillement croissant: on mesure que la solution a une viscosité de 2000 cP pour un gradient de cisaillement faible, typiquement inférieur à 0.01s$^{-1}$, alors que, à fort gradient, typiquement 100 s$^{-1}$, elle a une viscosité de 600 cP.

A gradient de cisaillement constant élevé 100 s$^{-1}$, on étudie le comportement à température croissante: à température ambiante, la solution a une viscosité de 600 cP; sa viscosité augmente avec la température jusqu'à 800 cP à haute température, 75°C. Cette augmentation de la viscosité avec la température constitue une signature remarquable, inédite.

On effectue en outre la mesure suivante:

G' = 250Pa, G"=50Pa, à fréquence d'oscillation de 1 Hz, à pourcentage de déformation de 1 %, à 25°C.

Exemple 4: Préparation d'un gel comprenant le polymère étoile de l'exemple 2

On mélange dans un bécher :

- de l'eau désionisée ;
- 5% en poids (en sec) de polymère de l'exemple 2;
- 1 % en poids de tensioactif SDS.

On obtient un gel.

Si on opère de même avec 2,5% de polymère et 0,5% de SDS le mélange est visqueux et devient un gel après 48 heures.

On a G' > G'', à fréquence d'oscillation de 1 Hz, à pourcentage de déformation de 1 %, à 25°C.

La présence de sel NaCl 10-2 M n'influence pas ce comportement, le sel ne détruit pas ces gels.

**Revendications**

1. Composition aqueuse comprenant :

   - de l'eau
   - un copolymère étoile comprenant un coeur et en périphérie du coeur des branches macromoléculaires comprenant chacune :

     - un bloc A intermédiaire lié au coeur ou au moins en partie compris dans le coeur, et
     - un bloc B périphérique lié au bloc A,
     - les blocs A et B étant tels que:

       - le bloc A est hydrophile et le bloc B est hydrophobe, ou
       - le bloc A est hydrophile et le bloc B est hydrophile cationique ou potentiellement cationique, et

   - au moins un tensioactif choisi parmi :

     - les tensioactifs non ioniques choisis parmi les phénols polyalcoxylés substitués par au moins un radical alkyle en $C_4$-$C_{20}$ ou substitués par au moins un radical alkylaryle dont la partie alkyle est en $C_1$-$C_6$, les alcools ou les acides gras en $C_6$-$C_{22}$, les triglycérides polyalcoxylés d'origine végétale ou animale, les esters de sorbitan, et les alkyles ou alcools polyalcoxylés ;
     - les tensioactifs anioniques choisis parmi les acides alkylsulfoniques, les acides arylsulfoniques, éventuellement substitués par un ou plusieurs groupements hydrocarbonés, et dont la fonction acide est partiellement ou totalement salifiée, les mono- ou diesters d'acides alkylsulfosucciniques, dont la partie alkyle, linéaire ou ramifiée est éventuellement substituée par un ou plusieurs groupements hydroxylés et/ou alcoxylés, linéaires ou ramifiés en $C_2$-$C_4$, les esters phosphates et les esters sulfates;
     - les tensioactifs cationiques,
     - les tensioactifs amphotères ;
     - et les tensioactifs zwitterioniques.

2. Composition selon la revendication précédente, **caractérisée en ce que** le coeur est :

   - un coeur minéral,
   - un coeur organique non polymérique,
   - un coeur organique polymérique réticulé chimiquement, ou
   - un coeur organique polymérique gelé physiquement réticulé.

3. Composition selon l'une des revendications précédentes, **caractérisée en ce que** le bloc A comprend des unités hydrophiles $A_{phile}$ dérivant de monomères choisis parmi les monomères suivants:

   - les monomères hydrophiles neutres $A_N$ dont peuvent dériver des unités $A_N$, de préférence

     - les acrylates et méthacrylates d'hydroxyéthyle, l'acrylamide, le méthacrylamide,
     - l'alcool vinylique,

   - les monomères anioniques ou potentiellement anioniques $A_A$, dont peuvent dériver des unités anioniques ou potentiellement anioniques $A_A$, de préférence,

     - l'acide acrylique, l'acide méthacrylique, l'acide ou anhydride maleique, et leurs sels hydrosolubles
     - le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle, l'acrylate ou le méthacrylate de sulfopropyle et leurs sels hydrosolubles

   - si le bloc B est hydrophobe, les monomères hydrophiles cationiques ou potentiellement cationiques $A_c$ dont peuvent dériver des unités $A_c$.

4. Composition selon l'une des revendications précédentes, **caractérisée en ce que** le bloc B est un bloc hydrophobe, comprenant des unités hydrophobes $B_{phobe}$ dérivant de monomères choisis parmi les monomères suivants :

   - styrène, alpha-méthylstyrène, vinyltoluène,
   - chlorure de vinyle, chlorure de vinylidène
   - acrylates et méthacrylates de méthyle, éthyle, butyle, 2-éthylhexyle
   - l'acétate de vinyle ou d'allyle.

5. Composition selon l'une des revendications précédentes, **caractérisée en ce que** le bloc B est un bloc hydrophile cationique ou potentiellement cationique, comprenant des unités cationiques ou potentiellement cationiques $B_c$ dérivant de monomères choisis parmi les monomères suivants:

   - N,N-diméthylaminométhyl -acrylamide ou -méthacrylamide,
   - le 2(N,N-diméthylamino)éthyl-acrylamide ou -méthacrylamide,
   - le 3(N,N-diméthylamino)propyl-acrylamide ou -méthacrylamide,

- le 4(N,N-diméthylamino)butyl-acrylamide ou -méthacrylamide
- le 2(diméthyl amino)éthyl acrylate (ADAM),
- le 2(diméthyl amino)éthyl méthacrylate (DMAM),
- le 3(diméthyl amino)propyl méthacrylate, le 2 (tertiobutylamino)éthyl méthacrylate,
- le 2(dipentylamino)éthyl méthacrylate,
- le 2(diéthylamino)éthyl méthacrylate
- les vinylpyridines
- la vinyl amine
- les vinylimidazolines
- le chlorure de triméthylammoniumpropylméthacrylate,
- le chlorure ou le bromure de triméthylammoniuméthylacrylamide ou méthacrylamide,
- le méthylsulfate de triméthylammoniumbutylacrylamide ou méthacrylamide,
- le méthylsulfate de triméthylammoniumpropylméthacrylamide (MES),
- le chlorure de (3-méthacrylamidopropyl)triméthylammonium (MAPTAC),
- le chlorure de (3-acrylamidopropyl)triméthylammonium (APTAC),
- le chlorure ou le méthylsulfate de méthacryloyloxyéthyl triméthylammonium,
- le chlorure d'acryloyloxyéthyl triméthylammonium ou le méthylsulfate d'acryloyloxyéthyl triméthylammonium (ADAMQUAT Cl ou ADAMQUAT MeS),
- le bromure, chlorure ou méthylsulfate de 1-éthyl 2-vinylpyridinium, de 1-éthyl 4-vinylpyridinium ;
- le chlorure de N,N-diméthyldiallylammonium (DADMAC) ;
- le chlorure de diméthylaminopropylméthacrylamide,N-(3-chloro-2-hydroxypropyl) triméthylammonium (DIQUAT).

**6.** Composition selon l'une des revendications précédentes, **caractérisée en ce qu'**elle comprend:

- un bloc A dérivant d'acide acrylique et un bloc B dérivant d'acrylate de butyle,
- un bloc A dérivant d'acrylamide et un bloc B dérivant d'acrylate de butyle, ou
- un bloc A dérivant d'acrylamide, et un bloc B dérivant de chlorure d'acryloyloxyéthyl triméthylammonium ou le méthylsulfate d'acryloyloxyéthyl triméthylammonium.

**7.** Composition selon l'une des revendications 1 à 4 ou 7, **caractérisée en ce que**:

- le bloc A est hydrophile et le bloc B est hydrophobe,
- le coeur est un coeur organique polymérique réticulé chimiquement,

- le rapport en poids entre le bloc A et le bloc B est supérieur ou égal à 40/60, de préférence supérieur ou égal à 50/50, de préférence supérieur ou égal à 65/35.

**8.** Composition selon la revendication 7, **caractérisée en ce que** le bloc A a une masse molaire comprise entre 5000 et 20000 g/mol, et le bloc B a une masse molaire comprise entre 2000 et 10000 g/mol.

**9.** Composition selon l'une des revendications 1 à 3 ou 5 à 7, **caractérisée en ce que**:

- le bloc A est hydrophile et le bloc B est cationique ou potentiellement cationique,
- le coeur est un coeur organique polymérique réticulé chimiquement,
- le rapport en poids entre le bloc A et le bloc B est supérieur ou égal à 40/60, de préférence supérieur ou égal à 50/50, de préférence supérieur ou égal à 65/35.

**10.** Composition selon la revendication 9, **caractérisée en ce que** le bloc A a une masse molaire comprise entre 5000 et 70000 g/mol, et le bloc B a une masse molaire comprise entre 1000 et 20000 g/mol.

**11.** Composition selon l'une des revendications 1 à 10, **caractérisée en ce que** le coeur est un coeur organique polymérique réticulé, et **en ce que** le copolymère est susceptible d'être obtenu selon un procédé de type "bras d'abord" ou de type "coeur d'abord".

**12.** Composition selon l'une des revendications précédentes, **caractérisée en ce que** le procédé met en oeuvre un procédé de polymérisation radicalaire contrôlée.

**13.** Composition selon l'une des revendications 1 à 4, 6 à 8 ou 11 à 12, **caractérisée en ce que** :

- le bloc A est hydrophile et le bloc B est hydrophobe, et
- la composition comprend un tensioactif non ionique.

**14.** Composition selon la revendication 13, **caractérisée en ce que** le tensioactif non ionique est un alcool polyethoxylé, de préférence en $C_{10}$-$C_{18}$.

**15.** Composition selon l'une des revendications 1 à 3, 5, ou 9 à 12, **caractérisée en ce que**:

- le bloc A est hydrophile et le bloc B est hydrophile cationique ou potentiellement cationique, et
- la composition comprend un tensioactif anionique.

**16.** Composition selon l'une des revendications 1 à 15, **caractérisée en ce que**:

- la composition comprend de 2 à 10% en poids de l'ensemble du copolymère étoile et du tensioactif, et
- le rapport entre tensioactif et le copolymère étoile est compris entre 10/90 et 50/50.

**17.** Composition selon l'une des revendications 1 à 16, **caractérisée en ce qu'**elle est sous forme d'un gel viscoélastique.

**18.** Composition selon l'une des revendications 1 à 16, **caractérisée en ce que** le copolymère étoile, le tensioactif et leurs quantités sont tels que la composition est sous forme d'un gel viscoélastique.

**19.** Composition selon l'une des revendications 1 à 18, **caractérisée en ce qu'**il s'agit d'un fluide pour l'exploitation de gisements de pétrole ou de gaz, de préférence un fluide de fracturation.

**20.** Procédé de contrôle de la formation de gels viscoélastiques comprenant les étapes suivantes:

a) préparer une composition aqueuse comprenant:

- de l'eau,
- un copolymère tel que décrit dans l'une des revendications 1 à 12,
- éventuellement un tensioactif,

b) former un gel par agitation et/ou par ajout de tensioactif et/ou chauffage.

**21.** Procédé selon la revendication 20, **caractérisé en ce que**:

- le bloc A est hydrophile et le bloc B est hydrophobe, et
- la composition comprend un tensioactif non ionique.

**22.** Procédé selon la revendication 20, **caractérisé en ce que** :

- le bloc A est hydrophile et le bloc B est hydrophile cationique ou potentiellement cationique, et
- la composition comprend un tensioactif anionique.

**23.** Procédé selon l'une des revendications 20 ou 21, **caractérisé en ce que** :

- la composition comprend de 2 à 10% en poids de l'ensemble du copolymère étoile et du tensioactif, et
- le rapport entre tensioactif et le copolymère étoile est inférieur à 50/50, de préférence compris entre 10/90 et 50/50.

**24.** Procédé selon la revendication 20, **caractérisé en ce que** :

- la composition de l'étape a) ne comprend pas le tensioactif, et
- le gel est formé par ajout d'une quantité efficace du tensioactif.

**25.** Procédé selon l'une des revendications 21, **caractérisé en ce que**:

- le bloc B est hydrophobe,
- la composition comprend une quantité de tensioactif non ionique supérieure à la quantité efficace pour former un gel, et
- le gel est formé par chauffage.

**26.** Procédé selon l'une des revendications 20 à 25, **caractérisé en ce que**:

- le procédé est mis en oeuvre lors de l'exploitation de gisements de pétrole ou de gaz,
- la composition aqueuse est un fluide de fracturation, et
- le chauffage éventuel est assuré par la température du gisement.

**27.** Copolymère étoile comprenant un coeur et en périphérie du coeur des branches macromoléculaires comprenant chacune:

- un bloc A intermédiaire lié au coeur ou au moins en partie compris dans le coeur, et
- un bloc B périphérique lié au bloc A,
- les blocs B étant tels que:

- le bloc A est hydrophile et le bloc B est hydrophile cationique ou potentiellement cationique.

**Claims**

**1.** Aqueous composition comprising:

- water;
- a star copolymer comprising a core and, at the periphery of the core, macromolecular branches each comprising:

- an intermediate block A linked to the core or at least partly included in the core; and

- a peripheral block B linked to the block A;
- the blocks A and B being such that:

  - block A is hydrophilic and block B is hydrophobic; or
  - block A is hydrophilic and block B is hydrophilic, cationic or potentially cationic; and

- at least one surfactant chosen from:

  - nonionic surfactants chosen from polyalkoxylated phenols substituted by at least one $C_4$-$C_{20}$ alkyl radical or substituted by at least one alkylaryl radical of which the alkyl part is a $C_1$-$C_6$ alkyl, $C_6$-$C_{22}$ fatty acids or alcohols, polyalkoxylated triglycerides of plant or animal origin, sorbitan esters and polyalkoxylated alkyls or alcohols;
  - anionic surfactants chosen from alkylsulphonic acids, arylsulphonic acids, optionally substituted by one or more hydrocarbon-based groups, and of which the acid function is partially or completely salified, monoesters or diesters of alkylsulphosuccinic acids, of which the linear or branched alkyl part is optionally substituted by one or more hydroxylated and/or alkoxylated linear or branched $C_2$-$C_4$ groups, phosphate esters and sulphate esters;
  - cationic surfactants;
  - amphoteric surfactants;
  - and zwitterionic surfactants.

2. Composition according to the preceding claim, **characterized in that** the core is:

   - a mineral core;
   - a nonpolymeric organic core;
   - a chemically-crosslinked polymeric organic core; or
   - a physically-crosslinked gelled polymeric organic core.

3. Composition according to either of the preceding claims, **characterized in that** the block A comprises hydrophilic units $A_{philic}$ deriving from monomers chosen from the following monomers;

   - neutral hydrophilic monomers AN from which AN units may derive; preferably
   - hydroxyethylacrylates and methacrylates, acrylamide, methacrylamide;
   - vinyl alcohol;
   - anionic or potentially anionic monomers $A_A$, from which anionic or potentially anionic units $A_A$ may derive; preferably:
   - acrylic acid, methacrylic acid, maleic acid or anhydride, and their water-soluble salts;
   - 2-sulphooxyethyl methacrylate, vinylbenzene sulphonic acid, allylsulphonic acid, 2-acrylamido-2-methylpropanesulphonic acid, sulphoethyl acrylate or methacrylate, sulphopropyl acrylate or methacrylate and their water-soluble salts;
   - if block B is hydrophobic, the hydrophilic cationic or potentially cationic monomers $A_c$ from which the $A_c$ units may derive.

4. Composition according to one of the preceding claims, **characterized in that** the block B is a hydrophobic block, comprising hydrophobic units $B_{phobic}$ deriving from monomers chosen from the following monomers:

   - styrene, $\alpha$-methylstyrene, vinyltoluene;
   - vinyl chloride, vinylidene chloride;
   - methyl, ethyl, butyl, 2-ethylhexyl acrylates and methacrylates; and
   - vinyl or allyl acetate.

5. Composition according to one of the preceding claims, **characterized in that** the block B is a hydrophilic cationic or potentially cationic block, comprising cationic or potentially cationic units $B_c$ deriving from monomers chosen from the following monomers;

   - N,N-dimethylaminomethyl acrylamide or methacrylamide;
   - 2-(N,N-dimethylamino)ethyl acrylamide or methacrylamide;
   - 3-(N,N-dimethylamino)propyl acrylamide or methacrylamide;
   - 4-(N,N-dimethylamino)butyl acrylamide or methacrylamide;
   - 2-(dimethylamino)ethyl acrylate (ADAM);
   - 2-(dimethylamino)ethyl methacrylate (DMAM);
   - 3-(dimethylamino)propyl methacrylate, 2-(tert-butylamino)ethyl methacrylate;
   - 2-(dipentylamino)ethyl methacrylate;
   - 2-(diethylamino)ethyl methacrylate;
   - vinyl pyridines;
   - vinyl amine;
   - vinyl imidazolines;
   - trimethylammonium propylmethacrylate chloride;
   - trimethylammonium ethylacrylamide chloride or bromide or trimethylammonium methacrylamide chloride or bromide;
   - trimethylammonium butacrylamide methyl sulphate or trimethylammonium methacrylamide methyl sulphate;
   - trimethylammonium propylmethacrylamide methyl sulphate (MES);
   - (3-methacrylamidopropyl)trimethylammonium chloride (MAPTAC);

- (3-acrylamidopropyl)trimethylammonium chloride (APTAC) ;
- (methacryloyloxyethyl)trimethylammonium chloride or methyl sulphate;
- (acryloyloxyethyl)trimethylammonium chloride or (acryloyloxyethyl)trimethylammonium methyl sulphate (ADAMQUAT Cl or ADAMQUAT MeS);
- 1-ethyl-2-vinylpyridinium bromide, chloride or methyl sulphate, 1-ethyl-4-vinylpyridinium bromide, chloride or methyl sulphate;
- N,N-dimethyldiallylammonium chloride (DADMAC); and
- dimethylaminopropylmethacrylamide N-(3-chloro- 2- hydroxypropyl) trimethylammonium chloride (DIQUAT).

6. Composition according to one of the preceding claims, **characterized in that** it comprises:

   - a block A deriving from acrylic acid and a block B deriving from butyl acrylate;
   - a block A deriving from acrylamide and a block B deriving from butyl acrylate; or
   - a block A deriving from acrylamide and a block B deriving from acryloyloxyethyl trimethylammonium chloride or acryloyloxyethyl trimethylammonium methyl sulphate.

7. Composition according to one of Claims 1 to 4, or 7, **characterized in that**:

   - block A is hydrophilic and block B is hydrophobic;
   - the core is a chemically-crosslinked polymeric organic core; and
   - the weight ratio between block A and block B is greater than or equal to 40/60, preferably greater than or equal to 50/50, preferably greater than or equal to 65/35.

8. Composition according to Claim 7, **characterized in that** block A has a molar mass between 5,000 and 20,000 g/mol, and block B has a molar mass between 2,000 and 10,000 g/mol.

9. Composition according to one of Claims 1 to 3 or 5 to 7, **characterized in that**:

   - block A is hydrophilic and block B is cationic or potentially cationic;
   - the core is a chemically-crosslinked polymeric organic core; and
   - the weight ratio between block A and block B is greater than or equal to 40/60 preferably greater than or equal to 50/50, preferably greater than or equal to 65/35.

10. Composition according to Claim 9, **characterized**

in that block A has a molar mass between 5,000 and 70,000 g/mol and block B has a molar mass between 1,000 and 20,000 g/mol.

11. Composition according to one of Claims 1 to 10, **characterized in that** the core is a crosslinked polymeric organic core, and **in that** the copolymer is capable of being obtained according to a method of the "arm first" type or "core first" type.

12. Composition according to one of the preceding claims, **characterized in that** the method uses a controlled radical polymerization method.

13. Composition according to one of Claims 1 to 4, 6 to 8 or 11 and 12, **characterized in that**:

    - block A is hydrophilic and block B is hydrophobic; and
    - the composition comprises a nonionic surfactant.

14. Composition according to Claim 13, **characterized in that** the nonionic surfactant is a preferably $C_{10}$-$C_{18}$ polyethoxylated alcohol.

15. Composition according to one of Claims 1 to 3, 5, or 9 to 12 **characterized in that**:

    - block A is hydrophilic and block B is hydrophilic cationic or potentially cationic; and
    - the composition comprises an anionic surfactant.

16. Composition according to one of claims 1 to 15, **characterized in that**:

    - the composition comprises from 2 to 10% by weight of the total of the star copolymer and of the surfactant; and
    - the ratio between the surfactant and the star copolymer is between 10/90 and 50/50.

17. Composition according to one of Claims 1 to 16, **characterized in that** it is in the form of a viscoelastic gel.

18. Composition according to one of Claims 1 to 16, **characterized in that** the star copolymer, the surfactant and their amounts are such that the composition is in the form of a viscoelastic gel.

19. Composition according to one of Claims 1 to 18, **characterized in that** it is a fluid for oil or gas production, preferably a fracturing fluid.

20. Method for controlling the formation of viscoelastic gels comprising the following steps:

a) preparing an aqueous composition comprising:

- water;
- a copolymer as described in one of Claims 1 to 12; and
- optionally a surfactant; and

b) forming a gel by stirring and/or by addition of surfactant and/or heating.

21. Method according to Claim 20, **characterized in that**:

- block A is hydrophilic and block B is hydrophobic; and
- the composition comprises a nonionic surfactant.

22. Method according to Claim 20, **characterized in that**:

- block A is hydrophilic and block B is hydrophilic cationic or potentially cationic; and
- the composition comprises an anionic surfactant.

23. Method according to either of Claims 20 and 21, **characterized in that**:

- the composition comprises from 2 to 10% by weight of the total of the star copolymer and of the surfactant; and
- the ratio between the surfactant and the star copolymer is less than 50/50, preferably between 10/90 and 50/50.

24. Method according to Claim 20, **characterized in that**:

- the composition of step a) does not comprise the surfactant; and
- the gel is formed by addition of an effective amount of the surfactant.

25. Method according to Claim 21, **characterized in that**:

- block B is hydrophobic;
- the composition comprises an amount of nonionic surfactant greater than the affective amount to form a gel; and
- the gel is formed by heating.

26. Method according to one of Claims 20 to 25, **characterized in that**:

- the method is used during oil or gas production;

- the aqueous composition is a fracturing fluid; and
- the optional heating is provided by the temperature of the oil or gas.

27. Star copolymer comprising a core and, at the periphery of the core, macromolecular branches each comprising:

- an intermediate block A linked to the core or at least partly included in the core; and
- a peripheral block B linked to the block A;
- the blocks A and B being such that:

- block A is hydrophilic and block B is hydrophilic, cationic or potentially cationic.

**Patentansprüche**

1. Wässrige Zusammensetzung, umfassend:

- Wasser
- ein Sterncopolymer mit einem Kern und an der Peripherie des Kerns angeordneten makromolekularen Verzweigungen, die jeweils Folgendes umfassen:

- einen Zwischenblock A, der an den Kern gebunden oder zumindest zum Teil im Kern enthalten ist, und
- einen peripheren Block B, der an den Block A gebunden ist,
- wobei die Blöcke A und B so beschaffen sind, dass:

- der Block A hydrophil ist und der Block B hydrophob ist oder
- der Block A hydrophil ist und der Block B kationisch oder potentiell kationisch hydrophil ist, und

- mindestens ein Tensid, ausgewählt unter:

- nichtionischen Tensiden, ausgewählt unter polyalkoxylierten Phenolen, die durch mindestens einen Alkylrest mit 4 bis 20 Kohlenstoffatomen oder durch mindestens einen Alkylarylrest mit 1 bis 6 Kohlenstoffatomen im Alkylteil, Alkoholen oder Fettsäuren mit 6 bis 22 Kohlenstoffatomen, polyalkoxylierten Triglyceriden pflanzlichen oder tierischen Ursprungs, Sorbitanestern und polyalkoxylierten Alkylverbindungen oder Alkoholen substituiert sind;
- anionischen Tensiden, ausgewählt unter Alkylsulfonsäuren, Arylsulfonsäuren, die gegebenenfalls durch eine oder mehrere Kohlenwasserstoffgruppen substituiert sind und deren Säurefunktion teilweise oder vollständig versalzt ist, Alkylsulfobernsteinsäuremonoestern und -diestern, deren linearer oder verzweigter Alkylteil gegebenenfalls durch eine oder mehrere Hydroxy- und/oder lineare oder verzweigte Alkoxygruppen mit 2 bis 4 Kohlenstoffatomen substituiert ist, Phosphatestern und Sulfatestern;
- kationischen Tensiden;
- amphoteren Tensiden
- und zwitterionischen Tensiden.

2. Zusammensetzung nach dem vorhergehenden Anspruch, **dadurch gekennzeichnet, dass** es sich bei dem Kern um:

   - einen anorganischen Kern,
   - einen nichtpolymeren organischen Kern,
   - einen chemisch vernetzten polymeren organischen Kern oder
   - einen physikalisch vernetzten gelierten polymeren organischen Kern
   handelt.

3. Zusammensetzung nach einem der vorhergehenden Ansprüche, **dadurch gekennzeichnet, dass** der Block A hydrophile Einheiten $A_{phil}$ umfasst, die sich von Monomeren ableiten, die unter den folgenden Monomeren ausgewählt sind:

   - neutralen hydrophilen Monomeren AN, von denen sich Einheiten AN ableiten können, vorzugsweise

     - Hydroxyethylacrylaten und -methacrylaten, Acrylamid, Methacrylamid,
     - Vinylalkohol,

   - anionischen oder potentiell anionischen Monomeren $A_A$, von denen sich anionische oder potentiell anionische Einheiten $A_A$ ableiten können, vorzugsweise

     - Acrylsäure, Methacrylsäure, Maleinsäure oder Maleinsäureanhydrid und wasserlöslichen Salzen davon,
     - 2-Sulfooxyethylmethacrylat, Vinylbenzolsulfonsäure, Allylsulfonsäure, 2-Acrylamido-2-methylpropansulfonsäure, Sulfoethylacrylat oder
     - methacrylat, Sulfopropylacrylat oder -methacrylat und wasserlöslichen Salzen davon,

   - dann, wenn der Block B hydrophob ist, kationischen oder potentiell kationischen hydrophilen Monomeren $A_c$, von denen sich Einheiten $A_c$ ableiten können.

4. Zusammensetzung nach einem der vorhergehenden Ansprüche, **dadurch gekennzeichnet, dass** es sich bei dem Block B um einen hydrophoben Block handelt, der hydrophobe Einheiten $B_{phob}$ umfasst, die sich von Monomeren ableiten, die unter den folgenden Monomeren ausgewählt sind:

   - Styrol, alpha-Methylstyrol, Vinyltoluol,
   - Vinylchlorid, Vinylidenchlorid,
   - Methyl-, Ethyl-, Butyl- und 2-Ethylhexylacrylat und -methacrylat,
   - Vinyl- oder Allylacetat.

5. Zusammensetzung nach einem der vorhergehenden Ansprüche, **dadurch gekennzeichnet, dass** es sich bei dem Block B um einen kationischen oder potentiell kationischen hydrophilen Block handelt, der kationische oder potentiell kationische Einheiten $B_c$ umfasst, die sich von Monomeren ableiten, die unter den folgenden Monomeren ausgewählt sind:

   - N,N-Dimethylaminomethylacrylamid oder -methacrylamid,
   - 2-(N,N-Dimethylamino)ethylacrylamid oder -methacrylamid,
   - 3-(N,N-Dimethylamino)propylacrylamid oder - methacrylamid,
   - 4-(N,N-Dimethylamino)butylacrylamid oder -methacrylamid,
   - 2-(Dimethylamino)ethylacrylat (ADAM),
   - 2-(Dimethylamino)ethylmethacrylat (DMAM),
   - 3-(Dimethylamino)propylmethacrylat, 2-(tert.-Butylamino)ethylmethacrylat,
   - 2-(Dipentylamino)ethylmethacrylat,
   - 2-(Diethylamino)ethylmethacrylat,
   - Vinylpyridinen,
   - Vinylamin,
   - Vinylimidazolinen,
   - Trimethylammoniumpropylmethacrylatchlorid,
   - Trimethylammoniumethylacrylamidchlorid oder
   - bromid oder Trimethylammoniummethacrylamidchlorid oder -bromid,
   - Trimethylammoniumbutylacrylamidmethylsulfat oder Trimethylammoniumbutylmethacrylamidmethylsulfat,
   - Trimethylammoniumpropylmethacrylamidmethylsulfat (MES),
   - (3-Methacrylamidopropyl)trimethylammoniumchlorid (MAPTAC),
   - (3-Acrylamidopropyl)trimethylammoniumchlorid (APTAC),
   - (Methacryloyloxyethyl)trimethylammoniumchlorid oder -methylsulfat,
   - (Acryloyloxyethyl)trimethylammoniumchlorid

oder (Acryloyloxyethyl)trimethylammoniummethylsulfat (ADAMQUAT Cl oder ADAMQUAT MeS),

- 1-Ethyl-2-vinylpyridiniumbromid, -chlorid oder -methylsulfat, 1-Ethyl-4-vinylpyridiniumbromid, -chlorid oder -methylsulfat,
- N,N-Dimethyldiallylammoniumchlorid (DADMAC) und
- Dimethylaminopropylmethacrylamid-N-(3-chlor-2-hydroxypropyl) trimethylammoniumchlorid (DIQUAT).

6. Zusammensetzung nach einem der vorhergehenden Ansprüche, **dadurch gekennzeichnet, dass** sie

- einen Block A, der sich von Acrylsäure ableitet, und einen Block B, der sich von Butylacrylat ableitet,
- einen Block A, der sich von Acrylamid ableitet, und einen Block B, der sich von Butylacrylat ableitet, oder
- einen Block A, der sich von Acrylamid ableitet, und einen Block B, der sich von (Acryloyloxyethyl)trimethylammoniumchlorid oder (Acryloyloxyethyl)trimethylammoniummethylsulfat ableitet, umfasst.

7. Zusammensetzung nach einem der Ansprüche 1 bis 4 oder 7, **dadurch gekennzeichnet, dass**

- der Block A hydrophil ist und der Block B hydrophob ist,
- der Kern ein chemisch vernetzter polymerer organischer Kern ist,
- das Gewichtsverhältnis zwischen Block A und Block B größer gleich 40/60, vorzugsweise größer gleich 50/50, vorzugsweise größer gleich 65/35, ist.

8. Zusammensetzung nach Anspruch 7, **dadurch gekennzeichnet, dass** der Block A eine Molmasse zwischen 5.000 und 20.000 g/mol aufweist und der Block B eine Molmasse zwischen 2.000 und 10.000 g/mol aufweist.

9. Zusammensetzung nach einem der Ansprüche 1 bis 3 oder 5 bis 7, **dadurch gekennzeichnet, dass**

- der Block A hydrophil ist und der Block B kationisch oder potentiell kationisch ist,
- es sich bei dem Kern um einen chemisch vernetzten polymeren organischen Kern handelt,
- das Gewichtsverhältnis zwischen Block A und Block B größer gleich 40/60, vorzugsweise größer gleich 50/50, vorzugsweise größer gleich 65/35, ist.

10. Zusammensetzung nach Anspruch 9, **dadurch gekennzeichnet, dass** der Block A eine Molmasse zwischen 5.000 und 70.000 g/mol aufweist und der Block B eine Molmasse zwischen 1.000 und 20.000 g/mol aufweist.

11. Zusammensetzung nach einem der Ansprüche 1 bis 10, **dadurch gekennzeichnet, dass** es sich bei dem Kern um einen vernetzten polymeren organischen Kern handelt und das Copolymer nach einem Verfahren vom "arm-first"-Typ oder vom "core-first"-Typ erhältlich ist.

12. Zusammensetzung nach einem der vorhergehenden Ansprüche, **dadurch gekennzeichnet, dass** bei dem Verfahren ein Verfahren zur kontrollierten radikalischen Polymerisation zur Anwendung kommt.

13. Zusammensetzung nach einem der Ansprüche 1 bis 4, 6 bis 8 oder 11 bis 12, **dadurch gekennzeichnet, dass**

- der Block A hydrophil ist und der Block B hydrophob ist und
- die Zusammensetzung ein nichtionisches Tensid umfasst.

14. Zusammensetzung nach Anspruch 13, **dadurch gekennzeichnet, dass** es sich bei dem nichtionischen Tensid um einen polyethoxylierten Alkohol, der vorzugsweise 10 bis 18 Kohlenstoffatome aufweist, handelt.

15. Zusammensetzung nach einem der Ansprüche 1 bis 3, 5 oder 9 bis 12, **dadurch gekennzeichnet, dass**

- der Block A hydrophil ist und der Block B kationisch oder potentiell kationisch hydrophil ist und
- die Zusammensetzung ein anionisches Tensid umfasst.

16. Zusammensetzung nach einem der Ansprüche 1 bis 15, **dadurch gekennzeichnet, dass**

- die Zusammensetzung 2 bis 10 Gew.-% der Summe des Sterncopolymers und des Tensids umfasst und
- das Verhältnis zwischen Tensid und Sterncopolymer zwischen 10/90 und 50/50 liegt.

17. Zusammensetzung nach einem der Ansprüche 1 bis 16, **dadurch gekennzeichnet, dass** sie in Form eines viskoelastischen Gels vorliegt.

18. Zusammensetzung nach einem der Ansprüche 1 bis 16, **dadurch gekennzeichnet, dass** das Sterncopolymer, das Tensid und ihre Mengen so beschaffen sind, dass die Zusammensetzung in Form eines viskoelastischen Gels vorliegt.

**19.** Zusammensetzung nach einem der Ansprüche 1 bis 18, **dadurch gekennzeichnet, dass** es sich um ein Fluid zur Förderung von Öl- oder Gasvorkommen, vorzugsweise ein Fracturing-Fluid, handelt.

**20.** Verfahren zur Steuerung der Bildung von viskoelastischen Gelen, bei dem man:

a) eine wässrige Zusammensetzung herstellt, die

- Wasser,
- ein Copolymer gemäß einem der Ansprüche 1 bis 12 und
- gegebenenfalls ein Tensid
umfasst,

b) durch Rühren und/oder Zuagbe von Tensid und/oder Erhitzen ein Gel bildet.

**21.** Verfahren nach Anspruch 20, **dadurch gekennzeichnet, dass**

- der Block A hydrophil ist und der Block B hydrophob ist und
- die Zusammensetzung ein nichtionisches Tensid umfasst.

**22.** Verfahren nach Anspruch 20, **dadurch gekennzeichnet, dass**

- der Block A hydrophil ist und der Block B kationisch oder potentiell kationisch hydrophil ist und
- die Zusammensetzung ein anionisches Tensid umfasst.

**23.** Verfahren nach einem der Ansprüche 20 oder 21, **dadurch gekennzeichnet, dass**

- die Zusammensetzung 2 bis 10 Gew.-% der Summe des Sterncopolymers und des Tensids umfasst und
- das Verhältnis zwischen Tensid und Sterncopolymer kleiner als 50/50 ist und vorzugsweise zwischen 10/90 und 50/50 liegt.

**24.** Verfahren nach Anspruch 20, **dadurch gekennzeichnet, dass**

- die Zusammensetzung von Schritt a) kein Tensid umfasst und
- das Gel durch Zugabe einer wirksamen Tensidmenge gebildet wird.

**25.** Verfahren nach Anspruch 21, **dadurch gekennzeichnet, dass**

- der Block B hydrophob ist,
- die Zusammensetzung eine Menge an nichtionischem Tensid umfasst, die über der zur Bildung eines Gels wirksamen Menge liegt, und
- das Gel durch Erhitzen gebildet wird.

**26.** Verfahren nach einem der Ansprüche 20 bis 25, **dadurch gekennzeichnet, dass**

- das Verfahren bei der Förderung von Öl- oder Gasvorkommen zur Anwendung kommt,
- es sich bei der wässrigen Zusammensetzung um ein Fracturing-Fluid handelt und
- das fakultative Erhitzen durch die Temperatur des Vorkommens gewährleistet wird.

**27.** Sterncopolymer mit einem Kern und an der Peripherie des Kerns angeordneten makromolekularen Verzweigungen, die jeweils Folgendes umfassen:

- einen Zwischenblock A, der an den Kern gebunden oder zumindest zum Teil im Kern enthalten ist, und
- einen peripheren Block B, der an den Block A gebunden ist,
- wobei die Blöcke A und B so beschaffen sind, dass:
- der Block A hydrophil ist und der Block B kationisch oder potentiell kationisch hydrophil ist.

## RÉFÉRENCES CITÉES DANS LA DESCRIPTION

**Documents brevets cités dans la description**

- WO 0116187 A
- WO 03006532 A
- WO 02070861 A
- WO 0002939 A
- WO 0177198 A
- WO 2004014535 A
- WO 2004078793 A
- WO 9858974 A
- WO 0075207 A
- WO 0142312 A
- WO 9801478 A
- WO 0208307 A
- WO 9931144 A
- WO 0226836 A
- WO 0210223 A
- WO 9903894 A
- WO 9630421 A
- WO 0039169 A
- WO 0037507 A
- US 5551516 A
- US 5439317 A

**Littérature non-brevet citée dans la description**

- **Tatemoto et al.** Jap. Daikin Kogyo Co ltd, 1975, vol. 50, 991
- **Matyjaszewski et al.** *Macromolecules,* 1995, vol. 28, 2093
- **D. Braun et al.** *Dans Macromol. Symp.,* 1996, vol. 111, 63
- **Wayland et al.** *Dans J.Am.Chem.Soc.,* 1994, vol. 116, 7973
- Oilfield Applications. Encyclopedia of Polymer Science and Engineering. vol. 10, 328-366